# EUROPEAN PATENT APPLICATION

(11) **EP 4 838 698 A1**
(43) Date of publication of application: **11.11.2026**
(21) Application number: 25752411.6
(22) Date of filing: 15.01.2025
(51) Int. Cl.: H01Q 5/307, H01Q 1/24, H04M 1/02

(54) **ANTENNA AND ELECTRONIC DEVICE COMPRISING SAME**

(30) Priority: 06.02.2024 KR 20240018028; 18.03.2024 KR 20240037051
(71) Applicant: Samsung Electronics Co., Ltd., Suwon-si, Gyeonggi-do 16677 (KR)
(72) Inventor: YU, Changha, Suwon-si, Gyeonggi-do 16677 (KR); KIM, Seunghwan, Suwon-si, Gyeonggi-do 16677 (KR); SEO, Mincheol, Suwon-si, Gyeonggi-do 16677 (KR); HWANG, Hochul, Suwon-si, Gyeonggi-do 16677 (KR); PARK, Gyubok, Suwon-si, Gyeonggi-do 16677 (KR)
(74) Representative: HGF
(86) International application number: PCT/KR2025/000895
(87) International publication number: WO 2025/170232

(57) **Abstract**

According to various embodiments, an electronic device comprises: a first housing formed at least partially from a conductive member; a second housing slidably coupled to the first housing; first and second conductive parts arranged to be spaced apart from each other through a nonconductive area in the first housing; and a wireless communication circuit configured to transmit or receive a signal through the first and second conductive parts, wherein the first conductive part can be arranged to be separated from a conductive member through first and second nonconductive parts spaced apart from each other, and the second conductive part can be arranged to be at least partially separated from the conductive member through a third nonconductive part.

## Description

### [Technical Field]

Embodiments of the disclosure relate to an antenna and an electronic device including the same.

### [Background Art]

Electronic devices are progressively becoming slimmer, and are being developed to increase rigidity, enhance design aspects, and differentiate functional elements thereof. Electronic devices are gradually changing from a uniform rectangular shape to various shapes. Electronic devices may have a transformable structure that is convenient to carry while allowing use of a large-screen display. An electronic device may have a structure (e.g., a rollable structure or a slidable structure) capable of varying a display area of a flexible display (e.g., a rollable display) through support by housings that operate in a sliding manner relative to each other. Such an electronic device may include at least one antenna (e.g., a bezel antenna or a metal frame antenna), and an arrangement structure considering antenna performance may be required.

The above information may be provided as related art for the purpose of facilitating an understanding of the disclosure. No assertion or determination is made as to whether any of the foregoing may be regarded as prior art with respect to the disclosure.

### [Disclosure of Invention]

### [Technical Problem]

An electronic device may include a rollable electronic device (e.g., a slidable electronic device) in which expansion and/or reduction of a display area of a flexible display (e.g., a rollable display, an expandable display, or a stretchable display) may be induced according to an operating state. The rollable electronic device may include a first housing (e.g., a book cover or a first housing structure) and a second housing (e.g., a front cover or a second housing structure) movably coupled to each other in an at least partially fitted-together manner. For example, the first housing and the second housing may operate to be slidable relative to each other and may support at least a portion of the flexible display. The flexible display may be induced to have a first display area in a slide-in state and may be induced to have a second display area greater than the first display area in a slide-out state.

The electronic device may include an antenna (e.g., a bezel antenna or a metal frame antenna) using at least one conductive portion disposed through at least a portion of the first housing or the second housing. The conductive portion may have an eaves structure capable of reducing introduction of external foreign matter by being disposed adjacent to the flexible display.

However, such an eaves structure may act as a black matrix (BM) region of the flexible display and reduce a display area, and unintended coupling may occur with a conductive structure of the display (e.g., a conductive sheet (Cu sheet) attached to a rear surface of a display panel), thereby degrading radiation performance of the antenna.

When the eaves structure is removed to address these problems, it may be difficult to secure rigidity for the electronic device because the thickness of the conductive portion of the housing is reduced, and difficulty may arise in designing the arrangement of a board disposed nearby to be connected to the antenna. Furthermore, because an operating structure of the rollable electronic device that takes a sliding operation into consideration, it may be difficult to secure an electrical length (e.g., a physical length) of the antenna corresponding to a designated operating frequency band (e.g., a low band) because of a limited arrangement structure of the conductive portion.

Various embodiments of the disclosure may provide an antenna having an arrangement structure capable of reducing performance degradation and an electronic device including the antenna.

Various embodiments may provide an antenna disposed to provide an expanded display area for the flexible display and an electronic device including the antenna.

Various embodiments may provide an antenna having a structure capable of helping to secure rigidity of the electronic device and design the arrangement of a peripheral electronic component (e.g., a board), and an electronic device including the antenna.

Various embodiments may provide an antenna having an arrangement structure capable of securing an electrical length corresponding to a designated frequency band and an electronic device including the antenna.

However, the problems to be solved in the disclosure are not limited to the above-mentioned problems, and may be variously expanded without departing from the spirit and scope of the disclosure.

### [Solution to Problem]

According to various embodiments, an electronic device may include a first housing at least partially formed of a conductive member, a second housing slidably coupled to the first housing, a first conductive portion and a second conductive portion disposed in the first housing to be spaced apart from each other through a non-conductive region, and a wireless communication circuit configured to transmit or receive a signal through the first conductive portion and the second conductive portion. The first conductive portion may be disposed to be separated from the conductive member through a first non-conductive portion and a second non-conductive portion spaced apart from each other, and the second conductive portion may be disposed to be at least partially separated from the conductive member through a third non-conductive portion.

According to various embodiments, an electronic device may include a first housing at least partially formed of a conductive member, a second housing slidably coupled to the first housing, a first conductive portion and a second conductive portion disposed in the first housing to be spaced apart from each other through a non-conductive region, and a wireless communication circuit configured to transmit or receive a signal through the first conductive portion and the second conductive portion. The first conductive portion may be disposed to be at least partially separated from the conductive member through at least one first non-conductive portion, and the second conductive portion may be disposed to be partially separated from the conductive member through a second non-conductive portion.

### [Advantageous Effects of Invention]

An electronic device according to exemplary embodiments of the disclosure may include an antenna using, as radiators, both a conductive portion from which an eaves structure is removed and another conductive portion separated from the conductive portion through a non-conductive region, thereby helping to expand a black matrix (BM) region of a flexible display and improve radiation performance of the antenna. In addition, the two conductive portions spaced apart from each other may help to secure an electrical length of the antenna operating in a designated frequency band and reinforce rigidity of the electronic device.

In addition, various effects directly or indirectly identified through this document may be provided.

The effects that may be obtained in the disclosure are not limited to the above-mentioned effects, and other effects not mentioned above will be clearly understood by a person ordinarily skilled in the art to which the disclosure pertains from the following description.

### [Brief Description of Drawings]

In the description based on the drawings, the same or similar reference numerals may be used for the same or similar components.
FIG. 1 is a block diagram of an electronic device in a network environment, according to various embodiments of the disclosure.
FIG. 2A is a front view illustrating an electronic device in a slide-in state according to various embodiments of the disclosure.
FIG. 2B is a rear view illustrating the electronic device in the slide-in state according to various embodiments of the disclosure.
FIG. 3A is a front view illustrating the electronic device in a slide-out state according to various embodiments of the disclosure.
FIG. 3B is a rear view illustrating the electronic device in the slide-out state according to various embodiments of the disclosure.
FIG. 4 is an exploded perspective view of an electronic device according to various embodiments of the disclosure.
FIG. 5A is a cross-sectional view of an electronic device taken along line 5a-5a of FIG. 2A, according to various embodiments of the disclosure.
FIG. 5B is a cross-sectional view of an electronic device according to various embodiments of the disclosure taken along line 5b-5b of FIG. 3A.
FIG. 6A is a rear perspective view of an electronic device including an antenna according to various embodiments of the disclosure.
FIG. 6B is a partial cross-sectional view of the electronic device taken along line 6B-6B of FIG. 6A according to various embodiments of the disclosure.
FIG. 7 illustrates a graph comparing radiation performance of antennas according to changes in the width of the third non-conductive portion according to various embodiments of the disclosure.
FIGS. 8A to 8F are configuration views of antennas disposed in a first housing according to various embodiments of the disclosure.
FIG. 9A is a front perspective view of an electronic device including an antenna according to various embodiments of the disclosure.
FIG. 9B is a rear configuration view of the electronic device of FIG. 9A according to various embodiments of the disclosure.
FIG. 10A is a front view of an electronic device according to various embodiments of the disclosure.
FIG. 10B is a rear configuration view of the electronic device of FIG. 10A according to various embodiments of the disclosure.
FIG. 10C is a partial cross-sectional view of the electronic device taken along line 10C-10C of FIG. 10B according to various embodiments of the disclosure.
FIG. 11A is a partial configuration view of an electronic device including only a second conductive portion disposed through two non-conductive portions spaced apart from each other in the configuration of the electronic device of FIG. 10A according to various embodiments of the disclosure.
FIG. 11B is a graph illustrating radiation performance of an antenna using the second conductive portion of FIG. 11A according to various embodiments of the disclosure.
FIG. 12A is a partial configuration view of an electronic device including an antenna using at least a portion of a first conductive portion in the configuration of the electronic device of FIG. 10A according to various embodiments of the disclosure.
FIG. 12B is a graph illustrating radiation performance of an antenna using the first conductive portion of FIG. 12A according to various embodiments of the disclosure.
FIG. 13A is a partial configuration view of an electronic device including an antenna using at least portions of a first conductive portion and a second conductive portion in the configuration of the electronic device of FIG. 10A according to various embodiments of the disclosure.
FIG. 13B is a graph illustrating radiation performance of an antenna using the first conductive portion and the second conductive portion of FIG. 13A according to various embodiments of the disclosure.

### [Mode for the Invention]

Hereinafter, embodiments of the disclosure will be described in detail with reference to the accompanying drawings such that those ordinarily skilled in the art to which the disclosure pertains can easily practice them. However, the disclosure may be implemented in many different forms without being limited to those embodiments described herein. In relation to the description of the drawings, identical or similar reference symbols may be used for the same or similar components. In some aspects, in the drawings and related descriptions, descriptions of well-known functions and configurations may be omitted for clarity and brevity.

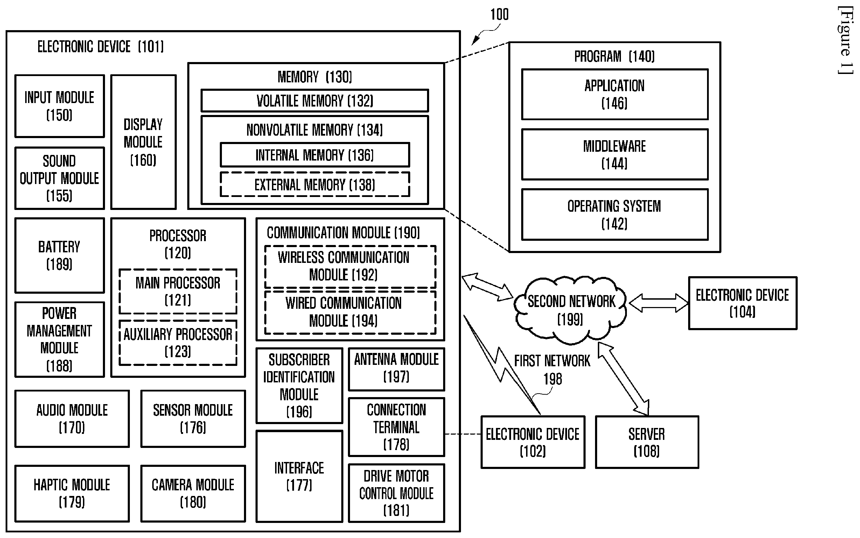

FIG. 1 is a block diagram illustrating an electronic device in a network environment according to an embodiment of the disclosure.

Referring to FIG. 1, an electronic device 101 in a network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment of the disclosure, the electronic device 101 may communicate with the external electronic device 104 via the server 108. According to an embodiment of the disclosure, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments of the disclosure, at least one of the components (e.g., the connecting terminal 178) may be omitted from the electronic device 101, or one or more other components may be added in the electronic device 101. In some embodiments of the disclosure, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment of the disclosure, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment of the disclosure, the processor 120 includes a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. In an example in which the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment of the disclosure, the auxiliary processor 123 (e.g., an image signal processor or a communication processor) may be implemented as part of another component (e.g., the camera module 180 or the communication module 190) functionally related to the auxiliary processor 123. According to an embodiment of the disclosure, the auxiliary processor 123 (e.g., the neural processing unit) includes a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semisupervised learning, or reinforcement learning. The artificial intelligence model includes a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 includes the volatile memory 132 or the non-volatile memory 134. The non-volatile memory 134 may include internal memory 136 and external memory 138.

The program 140 may be stored in the memory 130 as software, and may include, For example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, For example, a microphone, a mouse, a keyboard, a key (e.g., a button), or a digital pen (e.g., a stylus pen).

The sound output module 155 may output sound signals to the outside of the electronic device 101. The sound output module 155 may include, For example, a speaker or a receiver. The speaker may be used for general purposes, such as, for example, playing multimedia or playing record. The receiver may be used for receiving incoming calls. According to an embodiment of the disclosure, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment of the disclosure, the display module 160 includes a touch sensor adapted to detect a touch, or a pressure sensor adapted to measure the strength of force incurred by the touch.

The audio module 170 may convert a sound into an electrical signal and vice versa. According to an embodiment of the disclosure, the audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment of the disclosure, the sensor module 176 may include, For example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment of the disclosure, the interface 177 may include, For example, a high definition multimedia interface (HDMI), a universal serial bus (USB) interface, a secure digital (SD) card interface, or an audio interface.

A connecting terminal 178 includes a connector via which the electronic device 101 may be physically connected with the external electronic device (e.g., the external electronic device 102). According to an embodiment of the disclosure, the connecting terminal 178 may include, For example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment of the disclosure, the haptic module 179 may include, For example, a motor, a piezoelectric element, or an electric stimulator.

The camera module 180 may capture a still image or moving images. According to an embodiment of the disclosure, the camera module 180 includes one or more lenses, image sensors, image signal processors, or flashes.

The power management module 188 may manage power supplied to the electronic device 101. According to an embodiment of the disclosure, the power management module 188 may be implemented as at least part of, For example, a power management integrated circuit (PMIC).

The battery 189 may supply power to at least one component of the electronic device 101. According to an embodiment of the disclosure, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 includes one or more communication processors that are operable independently from the processor 120 (e.g., the application processor (AP)) and supports a direct (e.g., wired) communication or a wireless communication. According to an embodiment of the disclosure, the communication module 190 includes a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as, for example, BluetoothTM, wirelessfidelity (Wi-Fi) direct, or infrared data association (IrDA)) or the second network 199 (e.g., a long-range communication network, such as, for example, a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as, for example, the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment of the disclosure, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment of the disclosure, the antenna module 197 includes an antenna including a radiating element including a conductive material or a conductive pattern formed in or on a substrate (e.g., a printed circuit board (PCB)). According to an embodiment of the disclosure, the antenna module 197 includes a plurality of antennas (e.g., array antennas). In such a case, at least one antenna appropriate for a communication scheme used in the communication network, such as, for example, the first network 198 or the second network 199, may be selected, For example, by the communication module 190 (e.g., the wireless communication module 192) from the plurality of antennas. The signal or the power may then be transmitted or received between the communication module 190 and the external electronic device via the selected at least one antenna. According to an embodiment of the disclosure, another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module includes a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI).

According to an embodiment of the disclosure, commands or data may be transmitted or received between the electronic device 101 and the external electronic device 104 via the server 108 coupled with the second network 199. Each of the external electronic device 102 or 104 may be a device of a same type as, or a different type, from the electronic device 101. According to an embodiment of the disclosure, all or some of operations to be executed at the electronic device 101 may be executed at one or more of the external electronic device 102, the external electronic device 104, or the server 108. For example, if the electronic device 101 should perform a function or a service automatically, or in response to a request from a user or another device, the electronic device101, instead of, or in addition to, executing the function or the service, may request the one or more external electronic devices to perform at least part of the function or the service. The electronic device 101 may provide the outcome, with or without further processing of the outcome, as at least part of a reply to the request. To that end, a cloud computing, distributed computing, mobile edge computing (MEC), or client-server computing technology may be used, For example. The electronic device 101 may provide ultra low-latency services using, e.g., distributed computing or mobile edge computing. In another embodiment of the disclosure, the external electronic device 104 includes an Internet-of-things (IoT) device. The server 108 may be an intelligent server using machine learning and/or a neural network. According to an embodiment of the disclosure, the external electronic device 104 or the server 108 may be included in the second network 199. The electronic device 101 may be applied to intelligent services (e.g., a smart home, a smart city, a smart car, or healthcare) based on 5G communication technology or IoT-related technology.

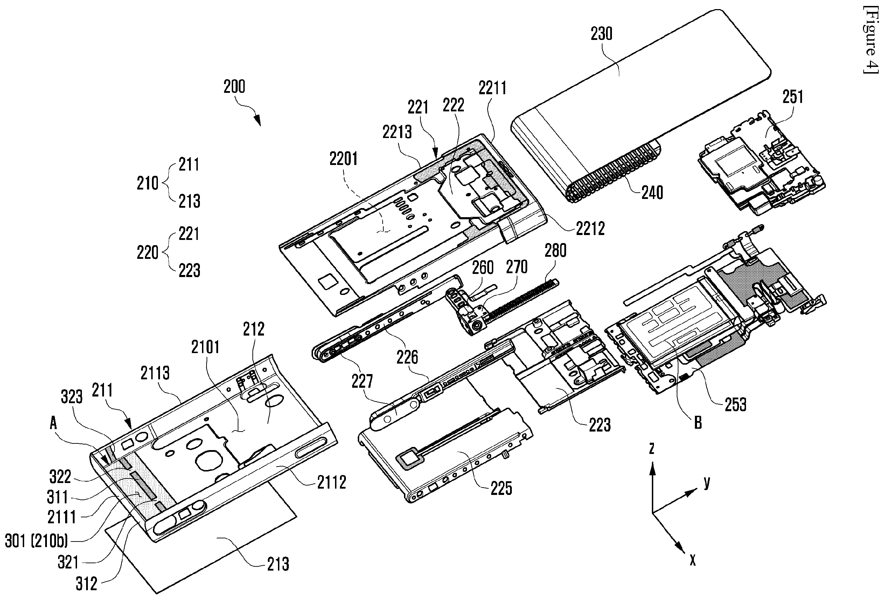

According to various embodiments of the disclosure, the sensor module 176 includes a movement distance detection sensor to detect a movement distance of a second housing (e.g., a second housing 220 in FIG. 4) from a first housing (e.g., a first housing 210 in FIG. 4) of an electronic device (e.g., an electronic device 200 of FIG. 4). In an embodiment of the disclosure, through movement of the second housing 220 from the first housing 210, the sensor module 176 may detect a slide-in state being a first state, a slide-out state being a second state, or an intermediate state being a third state between the slide-in state and the slide-out state. In a certain embodiment of the disclosure, the processor 120 may detect the movement distance in real time through the sensor module 176 while the second housing 220 is moved from the first housing 210, and control the display module 160 to display an object in correspondence to the changing display area through a flexible display (e.g., flexible display 230 in FIG. 4). In an embodiment of the disclosure, the electronic device 101 includes a drive motor control module 181 to control the operation of a drive motor (e.g., DC motor or stepping motor) (e.g., drive motor 260 in FIG. 4) disposed inside the electronic device. In an embodiment of the disclosure, the drive motor control module 181 may be replaced by the processor 120.

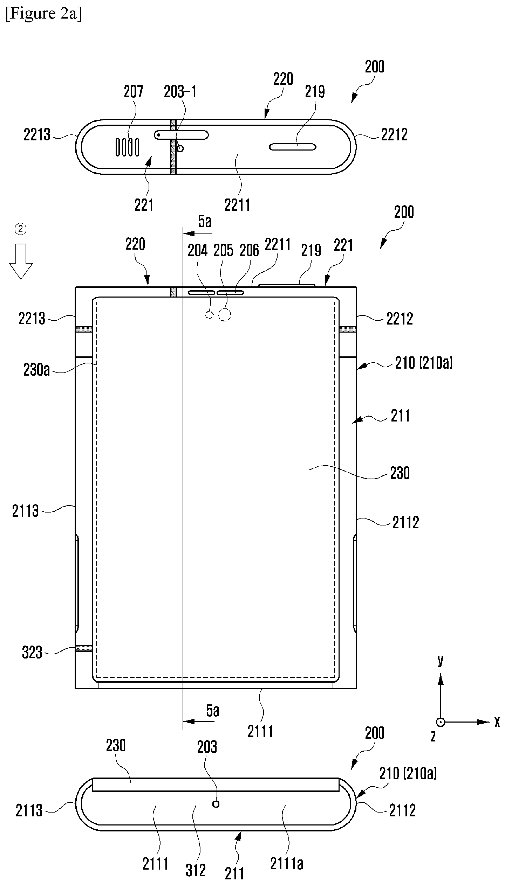

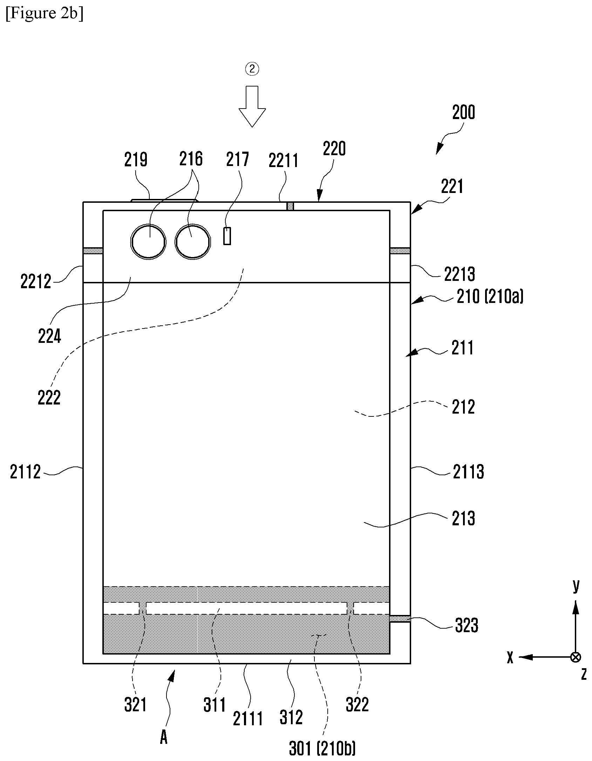

FIG. 2A is a front view illustrating an electronic device in a slide-in state according to various embodiments of the disclosure. FIG. 2B is a rear view illustrating the electronic device in the slide-in state according to various embodiments of the disclosure.

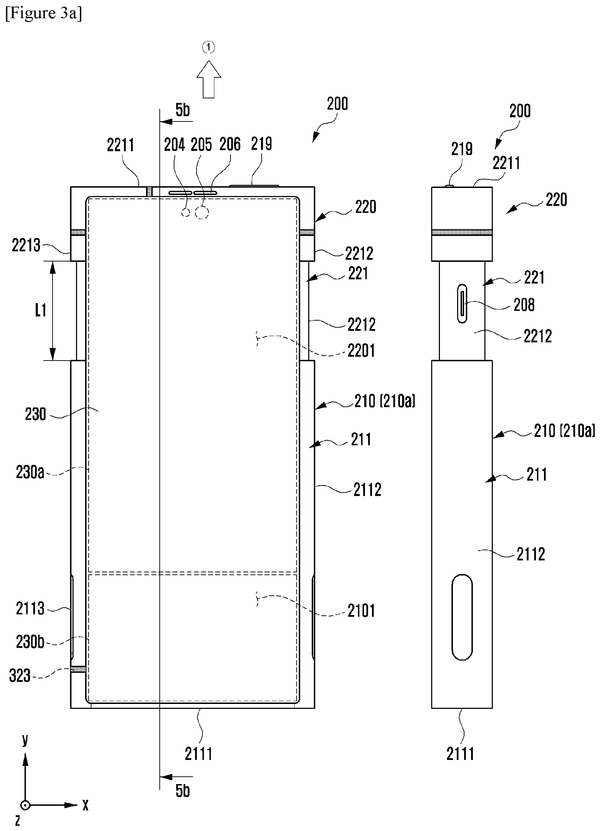

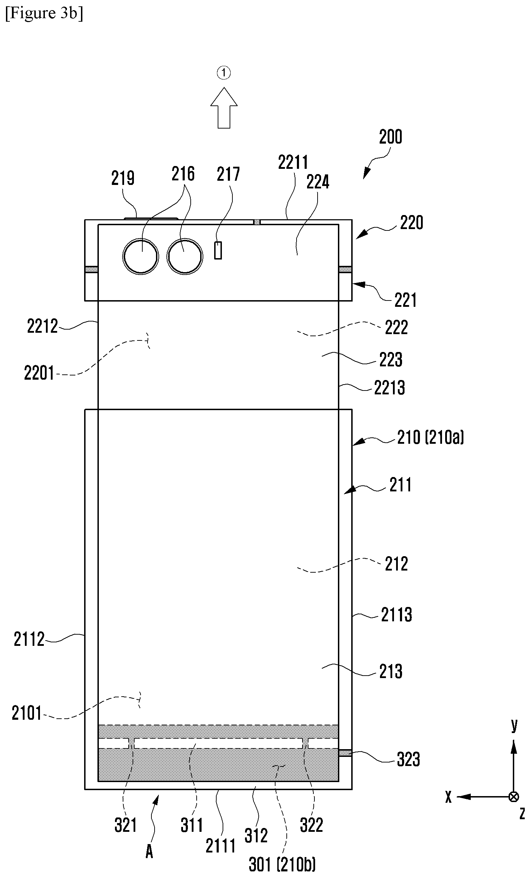

FIG. 3A is a front view illustrating the electronic device in a slide-out state according to various embodiments of the disclosure. FIG. 3B is a rear view illustrating the electronic device in the slide-out state according to various embodiments of the disclosure.

The electronic device 200 of FIGS. 2A to 3B may be at least partially similar to the electronic device 101 of FIG. 1, or may further include other embodiments of the electronic device.

Referring to FIGS. 2A to 3B, the electronic device 200 may include a first housing 210 (e.g., a back cover or a first housing structure), a second housing 220 (e.g., a front cover or a second housing structure) coupled to the first housing 210 to be slidable in a predetermined direction (e.g., a direction ① or a direction ②) (e.g., ±y-axis direction) with respect to the first housing 210, and a flexible display 230 (e.g., a rollable display, an expandable display, or a stretchable display) disposed to be supported by at least a portion of the first housing 210 and the second housing 220. In an embodiment, the second housing 220 may be coupled to the first housing 210 to be slidable with respect to the first housing 210 such that the second housing 220 is slid out in the first direction ① or slid in in the second direction ② opposite to the first direction ①. In an embodiment, the electronic device 200 may be changed to the slide-in state, which is the first state, as at least a portion of the second housing 220 is accommodated in at least a portion of a first space 2101 formed through the first housing 210. In an embodiment, the electronic device 200 may be changed to the slide-out state, which is the second state, as at least a portion of the second housing 220 is moved outward (e.g., in the direction ①) from the first space 2101. In an embodiment, the electronic device 200 may include a support member (e.g., the support member 240 of FIG. 4) (e.g., a bendable member, a multi-joint hinge module, a multi-bar assembly, a support bar assembly, or a multi-bar structure) that forms, at least partially, the same plane as at least a portion of the second housing 220 in the slide-out state and is accommodated, at least partially, in the first space 2101 of the first housing 210 in a bending manner in the slide-in state. In an embodiment, at least a portion of the flexible display 230 may be disposed to be supported by at least a portion of the second housing 220. In an embodiment, at least a portion of the remaining portion of the flexible display 230 may be disposed to be supported by the support member 240 (e.g., the support member 240 of FIG. 4). In an embodiment, the support member (e.g., the support member 240 of FIG. 4) may be disposed on the rear surface of the flexible display 230. In an embodiment, the support member (e.g., the support member 240 of FIG. 4) may be disposed on the rear surface of the flexible display 230 by being attached thereto through an adhesive member (e.g., by taping or bonding). In an embodiment, at least a portion of the flexible display 230 may be disposed not to be visible from the outside by being accommodated in the first space 2101 of the first housing 210 in a bending manner while being supported by the support member (e.g., the support member 240 of FIG. 4) in the slide-in state. In an embodiment, at least a portion of the flexible display 230 may be moved to be visible from the outside while being supported by the support member (e.g., the support member 240 of FIG. 4) forming, at least partially, the same plane as the second housing 220 in the slide-out state.

According to various embodiments, the first housing 210 may include a first side surface member 211, and the second housing 220 may include a second side surface member 221. In an embodiment, the first side surface member 211 may include a first side portion 2111 (a first side) (e.g., a first side surface) disposed on a lower side of the electronic device 200 and having a first length, a second side portion 2112 (a second side) (e.g., a second side surface) extending in a direction perpendicular to the first side portion 2111 (e.g., a y-axis direction) from one end of the first side portion 2111 and having a second length, and a third side portion 2113 (a third side) (e.g., a third side surface) extending parallel to the second side portion 2112 from the other end of the first side portion 2111 and having the second length. In an embodiment, the first side surface member 211 may be at least partially formed of a conductive member (e.g., metal). In an embodiment, the first side surface member 211 may be formed by coupling a conductive member and a non-conductive member (e.g., polymer). In an embodiment, the first housing 210 may include a first extension member 212 extending from at least a portion of the first side surface member 211 to at least a portion of the first space 2101. In an embodiment, the first extension member 212 may be integrally formed with the first side surface member 211. In an embodiment, the first extension member 212 may be formed separately from the first side surface member 211 and may be structurally coupled to the first side surface member 211.

According to various embodiments, the second side surface member 221 may include a fourth side portion 2211 (a fourth side) (e.g., a fourth side surface) disposed on an upper side of the electronic device 200 and having a third length, a fifth side portion 2212 (a fifth side) (e.g., a fifth side surface) extending in a direction perpendicular to the fourth side portion 2211 (e.g., a -y-axis direction) from one end of the fourth side portion 2211 so as to correspond to the second side portion 2112 and having a fourth length, and a sixth side portion 2213 (a sixth side) (e.g., a fifth side surface) extending from the other end of the fourth side portion 2211 in a direction parallel to the fifth side portion 2212 so as to correspond to the third side portion 2113 and having the fourth length. In an embodiment, the second side surface member 221 may be at least partially formed of a conductive member (e.g., metal). In some embodiments, the second side surface member 221 may be formed by coupling a conductive member and a non-conductive member (e.g., polymer). In an embodiment, at least a portion of the second side surface member 221 may include a second extension member 222 extending to at least a portion of a second space 2201 of the second housing 220. In an embodiment, the second extension member 222 may be integrally formed with the second side surface member 221. In an embodiment, the second extension member 222 may be formed separately from the second side surface member 221 and may be structurally coupled to the second side surface member 221.

According to various embodiments, the second side portion 2112 and the fifth side portion 2212 may be coupled to be slidable with respect to each other. In an embodiment, the third side portion 2113 and the sixth side portion 2213 may be coupled to be slidable with respect to each other. In an embodiment, in the slide-in state, a portion of the fifth side portion 2212 may be disposed substantially not to be visible from the outside by overlapping the second side portion 2112. In an embodiment, in the slide-in state, a remaining portion of the fifth side portion 2212 may be disposed to be visible from the outside. In some embodiments, in the slide-in state, the fifth side portion 2212 may be disposed substantially not to be visible from the outside by overlapping the second side portion 2112. In an embodiment, in the slide-in state, a portion of the sixth side portion 2213 may be disposed substantially not to be visible from the outside by overlapping the third side portion 2113. In an embodiment, in the slide-in state, a remaining portion of the sixth side portion 2213 may be disposed to be visible from the outside. In some embodiments, in the slide-in state, the sixth side portion 2213 may be disposed substantially not to be visible from the outside by overlapping the third side portion 2113. In an embodiment, a portion of the second extension member 222 may be disposed to be visible from the outside in the slide-in state. In some embodiments, in the slide-in state, the second extension member 222 may be disposed to be substantially invisible from the outside by overlapping the first extension member 212.

According to various embodiments, the first housing 210 may include a first rear surface cover 213 coupled to at least a portion of the first side surface member 211. In an embodiment, the first rear surface cover 213 may be disposed to be coupled to at least a portion of the first extension member 212. In some embodiments, the first rear surface cover 213 may be integrally formed with the first side surface member 211. In an embodiment, the first rear surface cover 213 may be formed of polymer, coated or colored glass, ceramic, metal (e.g., aluminum, stainless steel (STS), or magnesium), or a combination of at least two of these materials. In some embodiments, the first rear surface cover 213 may extend to at least a portion of the first side surface member 211. In an embodiment, the first rear surface cover 213 may be omitted, and at least a portion of the first extension member 212 may replace the first rear surface cover 213.

According to various embodiments, the second housing 220 may include a second rear surface cover 223 coupled to at least a portion of the second side surface member 221. In an embodiment, the second rear surface cover 223 may be disposed to be coupled to at least a portion of the second extension member 222. In an embodiment, the second rear surface cover 223 may be integrally formed with the second side surface member 221. In an embodiment, the second rear surface cover 223 may be formed of polymer, coated or colored glass, ceramic, metal (e.g., aluminum, stainless steel (STS), or magnesium), or a combination of at least two of these materials. In some embodiments, the second rear surface cover 223 may extend to at least a portion of the second side surface member 221. In an embodiment, the second rear surface cover 223 may be omitted, and at least a portion of the second extension member 222 may replace the second rear surface cover 223. In some embodiments, the second extension member 222 may be omitted, and the second rear surface cover 223 may replace the second extension member 222. In an embodiment, the second housing 220 may include a window cover 224 disposed on at least a portion of the second rear surface cover 223. In an embodiment, the window cover 224 may be disposed in a region exposed to the outside of the second housing 220 in the slide-in state, and may be formed of a material facilitating detection of an external environment through at least one camera module 216 and/or sensor module 217 disposed in the internal space 2201 of the second housing 220. For example, the window cover 224 may be formed of a glass material and/or a polymer material in which at least a region corresponding to the camera module 216 and/or the sensor module 217 is formed to be transparent. In some embodiments, the electronic device 200 may further include a cover member 2111a disposed to cover at least a portion of the first side portion 2111 of the first housing 210. In some embodiments, the window cover 224 or the cover member 2111a may be omitted.

According to various embodiments, the flexible display 230 may include a first portion 230a (e.g., a flat portion) that is always visible from the outside, and a second portion 230b (e.g., a bendable portion or a bending portion) extending from the first portion 230a and accommodated, in the slide-in state, in the first space 2101 of the first housing 210 in an at least partially bent manner so as not to be visible from the outside. In an embodiment, at least a portion of the first portion 230a may be disposed to be supported by the second housing 220, and the remaining portion of the first portion 230a and the second portion 230b may be disposed to be supported, at least partially, by the support member (e.g., the support member 240 of FIG. 4). In an embodiment, the second portion 230b of the flexible display 230, in a state in which the second housing 220 is slid out along the first direction ①, may form substantially the same plane as the first portion 230a while being supported by the support member (e.g., the support member 240 of FIG. 4), and may be disposed to be visible from the outside. In an embodiment, the second portion 230b of the flexible display 230, in a state in which the second housing 220 is slid in along the second direction ②, may be accommodated in the first space 2101 of the first housing 210 in a bending manner and may be disposed to be invisible from the outside. Accordingly, the flexible display 230 may have a display area that is varied as the second housing 220 moves in a sliding manner with respect to the first housing 210 along a predetermined direction (e.g., the ±y-axis direction).

According to various embodiments, the flexible display 230 may have a first display area (e.g., a region corresponding to the first portion 230a) in the slide-in state (e.g., the first state). In an embodiment, when the second housing 220 transitions, with respect to the first housing 210, to the slide-out state (e.g., the second state) in which the second housing 220 has moved by a specified length L1 (e.g., a sliding stroke), the flexible display 230 may additionally secure, in addition to the first display area, a second display area (e.g., a region corresponding to the second portion 230b) corresponding to the specified slid-out length L1. For example, when the flexible display 230 transitions from the slide-in state to the slide-out state, the display area may be expanded.

According to various embodiments, the electronic device 200 may include at least one of an input device (e.g., the microphone 203-1), an audio output device (e.g., the receiver 206 for a call and/or the speaker 207), sensor modules 204 and 217, a camera module (e.g., the first camera module 205 or the second camera module 216), a connector port 208, a key input device 219, or an indicator (not illustrated), disposed in the second space 2201 of the second housing 220. In an embodiment, the electronic device 200 may include another input device (e.g., a microphone 203) disposed in the first housing 210. In some embodiments, the electronic device 200 may be configured such that at least one of the above-described components is omitted or other components are additionally included. In some embodiments, at least one of the above-described components may be disposed in the first space 2101 of the first housing 210.

According to various embodiments, the input device may include a microphone 203-1. In some embodiments, the input device (e.g., the microphone 203-1) may include a plurality of microphones disposed to detect a direction of sound. The audio output device may include, for example, a receiver 206 for a call and a speaker 207. In an embodiment, the speaker 207 may correspond to the outside through at least one speaker hole formed in the second housing 220 at a position (e.g., the fourth side surface 2211) that is always exposed to the outside regardless of the slide-in state and the slide-out state. In an embodiment, the connector port 208 may correspond to the outside through a connector port hole formed in the second housing 220 in the slide-out state. In an embodiment, the connector port 208 may be concealed not to be visible from the outside in the slide-in state. In some embodiments, in the slide-in state, the connector port 208 may correspond to the outside through an opening formed in the first housing 210 and formed to correspond to the connector port hole. In some embodiments, the receiver 206 for a call may include a speaker (e.g., a piezo speaker) configured to operate without a separate speaker hole.

According to various embodiments, the sensor modules 204 and 217 may generate an electrical signal or a data value corresponding to an operating state inside the electronic device 200 or an environmental state outside the electronic device 200. In an embodiment, the sensor modules 204 and 217 may include, for example, a first sensor module 204 (e.g., a proximity sensor or an illuminance sensor) disposed on the front surface of the electronic device 200 and/or a second sensor module 217 (e.g., a heart rate monitoring (HRM) sensor) disposed on the rear surface of the electronic device 200. In an embodiment, the first sensor module 204 may be disposed below the flexible display 230 on the front surface of the electronic device 200. In an embodiment, the first sensor module 204 and/or the second sensor module 217 may include at least one of a proximity sensor, an illuminance sensor, a time-of-flight (TOF) sensor, an ultrasonic sensor, a fingerprint recognition sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include a first camera module 205 disposed on the front surface of the electronic device 200 and a second camera module 216 disposed on the rear surface of the electronic device 200. In an embodiment, the electronic device 200 may further include a flash (not illustrated) positioned near the second camera module 216. In an embodiment, the camera modules 205 and 216 may include one or more lenses, an image sensor, and/or an image signal processor. In an embodiment, the first camera module 205 may be disposed below the flexible display 230 and may be configured to capture a subject through a portion of an active region (e.g., a display region) of the flexible display 230.

According to various embodiments, the first camera module 205 among the camera modules and a first sensor module 204 among the sensor modules 204 and 217 may be disposed to detect an external environment through the flexible display 230. For example, the first camera module 205 or the first sensor module 204 may be disposed in the second space 2201 of the second housing 220 to be in contact with the external environment through a transmissive region or a perforated opening formed in the flexible display 230. In an embodiment, the region of the flexible display 230 facing the first camera module 205 may be formed as a transmissive region having a predetermined transmittance, as a portion of an active region displaying content. In an embodiment, the transmissive region may be formed to have a transmittance in a range of about 5% to about 20%. The transmissive region may include a region overlapping an effective region (e.g., a field-of-view region) of the first camera module 205, through which light passes to be imaged on the image sensor and generate an image. For example, the transmissive region of the flexible display 230 may include a region having a lower arrangement density of pixels and/or a lower wire density than a periphery. For example, the transmissive region may be replaced by the above-described opening. For example, some camera modules 205 may include an under-display camera (UDC). In some embodiments, some sensor modules 204 may be disposed in the second space 2201 of the second housing 220 so as to perform a function thereof without being visually exposed through the flexible display 230.

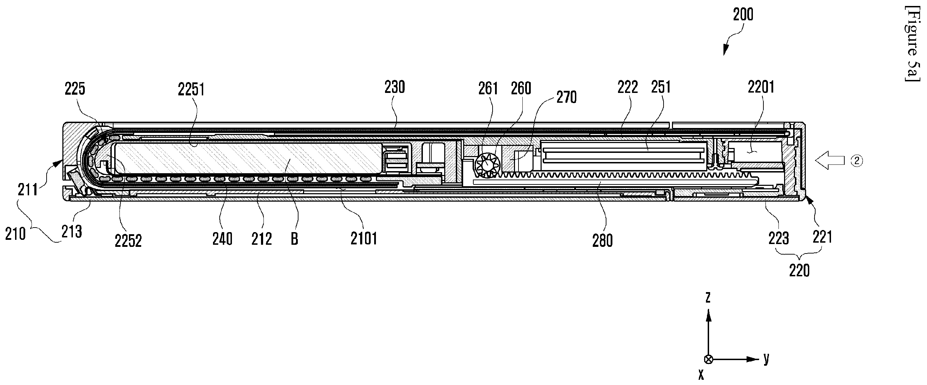

According to various embodiments, the slide-in operation and/or the slide-out operation of the electronic device 200 may be automatically performed. For example, the slide-in operation and/or the slide-out operation of the electronic device 200 may be performed through gear engagement between a driving motor (e.g., the driving motor 260 of FIG. 4) including a pinion gear (e.g., the pinion gear 261 of FIG. 5A) disposed in the second space 2201 of the second housing 220, and a rack gear (e.g., the rack gear 280 of FIG. 5A) disposed in the first space 2101 of the first housing 210, extending to at least a portion of the second space 2201, and engaged with the pinion gear. For example, when the processor (e.g., the processor 120 of FIG. 1) of the electronic device 200 detects a triggering signal for transitioning from the slide-in state to the slide-out state or from the slide-out state to the slide-in state, the processor may drive the driving motor (e.g., the driving motor 260 of FIG. 4) disposed inside the electronic device 200. In an embodiment, the triggering signal may include a signal according to selection (e.g., touch) of an object displayed on the flexible display 230 or a signal according to manipulation (e.g., pressing) of a physical button (e.g., a key button) included in the electronic device 200.

According to various embodiments, the electronic device 200 has a structure in which the second housing 220 is slid in and/or slid out with respect to the first housing 210 along the length direction of the electronic device 200 (e.g., a vertical direction) (e.g., the ±y-axis direction), but the disclosure is not limited thereto. For example, the electronic device 200 may have a structure in which the second housing 220 is slid in and/or slid out with respect to the first housing 210 along the width direction (e.g., a horizontal direction) (e.g., the ±x-axis direction) perpendicular to the length direction of the electronic device 200. In some embodiments, the electronic device 200 may be formed such that the length of the first side portion 2111 of the first housing 210 is greater than the length of the second side portion 2112. In this case, the length of the fourth side portion 2211 of the second housing 220 may also be formed to be correspondingly greater than the length of the fifth side portion 2212.

According to various embodiments, the electronic device 200 may include an antenna A operating through a first conductive portion 311 and a second conductive portion 312 disposed through at least a portion of the first housing 210 formed of a conductive member 210a (e.g., metal). In an embodiment, the first conductive portion 311 may be disposed in a non-conductive region 301 disposed in at least a portion of the first housing 210. In an embodiment, the first conductive portion 311 may be disposed between a first non-conductive portion 321 and a second non-conductive portion 322 spaced apart from each other in the non-conductive region 301. In an embodiment, the non-conductive region 301 may be filled with a non-conductive member 210b (e.g., polymer). In an embodiment, the second conductive portion 312 may be disposed to be spaced apart from the first conductive portion 311 through the non-conductive region 301, and one end thereof may be physically and/or electrically separated from the conductive member 210a through a third non-conductive portion 323. Accordingly, the antenna A may be provided with a sufficient electrical length by using the first conductive portion 311 and at least a portion of the second conductive portion 312, thereby helping to improve radiation performance. In addition, the second conductive portion 312 disposed as a portion of the first side portion 2111 may not form an eaves structure that would otherwise be disposed at a distance from the flexible display 230 smaller than the distance between the flexible display 230 and the first side portion 2111. This may help to improve radiation performance of the antenna A by reducing unintended coupling between the flexible display 230 and the second conductive portion 312 as a separation distance between the second conductive portion 312 and the flexible display 230 increases.

FIG. 4 is an exploded perspective view of an electronic device according to various embodiments of the disclosure.

In describing the electronic device 200 of FIG. 4, the same reference numerals are assigned to components substantially identical to those of the electronic device 200 of FIGS. 2A to 3B, and a detailed description thereof may be omitted.

Referring to FIG. 4, the electronic device 200 may include a first housing 210 including a first space 2101, a second housing 220 coupled to the first housing 210 to be slidable with respect to the first housing 210 and including a second space 2201, a support member 240 (e.g., a bendable member or a multi-bar assembly) fixed to at least a portion of the second housing 220 and accommodated in the first space 2101 to be at least partially bendable according to the slide-in operation, a flexible display 230 disposed to be supported by at least a portion of the support member 240 and the second housing 220, and a driving unit (e.g., a driving module or a driving mechanism) configured to drive the second housing 220 in the slide-in direction (e.g., the -y-axis direction) and/or the slide-out direction (e.g., the y-axis direction) with respect to the first housing 210. In an embodiment, the first housing 210 may include a first side surface member 211 and a first rear surface cover 213 (e.g., a first rear bracket) coupled to at least a portion of the first side surface member 211 (e.g., at least a portion of a first extension member 212). In an embodiment, the first space 2101 may be formed through the first side surface member 211 and the first extension member 212. In some embodiments, the first space 2101 may be formed through coupling of the first side surface member 211 and the first rear surface cover 213.

According to various embodiments, the second housing 220 may include a second side surface member 221 and a second rear surface cover 223 (e.g., a second rear bracket) coupled to at least a portion of the second side surface member 221 (e.g., at least a portion of the second extension member 222). In some embodiments, the second housing 200 may further include a window cover coupled to the second rear surface cover 223. In an embodiment, the second space 2201 may be formed through coupling of the second side surface member 221 and the second rear surface cover 223.

According to various embodiments, the driving unit (e.g., a driving module) may include a driving motor 260 disposed in the second space 2201 and including a pinion gear (e.g., the pinion gear 261 of FIG. 5A), and a rack gear 280 fixed to the support bracket 225, extending from the first space 2101 to the second space 2201, and disposed to be engaged with the pinion gear 261. In an embodiment, the electronic device 200 may further include a reduction module (e.g., a reduction gear assembly) structurally coupled to the driving motor 260 so as to reduce a rotational speed and increase a driving force. In an embodiment, the driving motor 260 may be disposed to be supported by the second extension member 222 in the second space 2201 of the second housing 220. In an embodiment, the driving motor 260 may be disposed to be supported, at least partially, through a motor bracket 270 fixed to the second extension member 222. In an embodiment, the rack gear 280 may be disposed to be guided in the sliding direction through at least a portion of the motor bracket 270. Accordingly, when the electronic device 200 is assembled, the pinion gear (e.g., the pinion gear 261 of FIG. 5A) may maintain a state of being engaged with the rack gear 280, and the pinion gear 261 receiving a driving force from the driving motor 260 may move along the rack gear 280. As a result, the second housing 220 may be moved in the slide-in direction (e.g., the -y-axis direction) or the slide-out direction (e.g., the y-axis direction) with respect to the first housing 210. In some embodiments, the electronic device 200 may be configured such that the driving motor 260 is fixed to the first housing 210 and the rack gear 280 is fixed to the second housing 220.

According to various embodiments, the electronic device 200 may include the support bracket 225 fixed in the first space 2101 of the first housing 210. In an embodiment, the electronic device 200 may include a pair of guide rails 226 (e.g., linear motion (LM) guides) fixed to opposite side surfaces of the support bracket 225 to guide opposite ends of the support member 240 in the sliding direction and simultaneously guide the second housing 220 in the sliding direction. In an embodiment, the electronic device 200 may include a pair of slide blocks 227 fixed to the first housing and respectively slidably coupled to the pair of guide rails 226. In an embodiment, the support bracket 225 and the pair of guide rails 226 may be fixed to the first housing 210 by fastening members such as screws. In an embodiment, the support bracket may include a battery seating portion (e.g., the battery seating portion 2251 of FIG. 5A) configured to accommodate a battery B and a support portion (e.g., the support portion 2252 of FIG. 5A) formed on one side of the battery seating portion 2251 and configured to support the rear surface of the support member 240 bent during the sliding operation of the second housing 220. In an embodiment, the support portion 2252 may have an outer surface formed in a curved shape (in a semicircular or half-round shape) for smooth guiding of the support member 240. In an embodiment, the support bracket 225 and the guide rails 226 may be fixed in the first space 2101 of the first housing 210 by fastening members such as screws. In some embodiments, the electronic device 200 may further include a battery cover coupled to the support bracket 225 to cover the mounted battery B. In an embodiment, the rack gear 280 may be fixed to an outer surface of the support bracket 225 by fastening members such as screws to extend toward the second space 2201. In an embodiment, the rack gear 280 may be disposed at a center of the support bracket 225 (e.g., a left-right symmetric center of the electronic device 200) to extend across a center of the electronic device 200 along the sliding direction of the second housing 220. Such a central arrangement may reduce current consumption by reducing an increase in driving resistance due to eccentricity during the sliding operation.

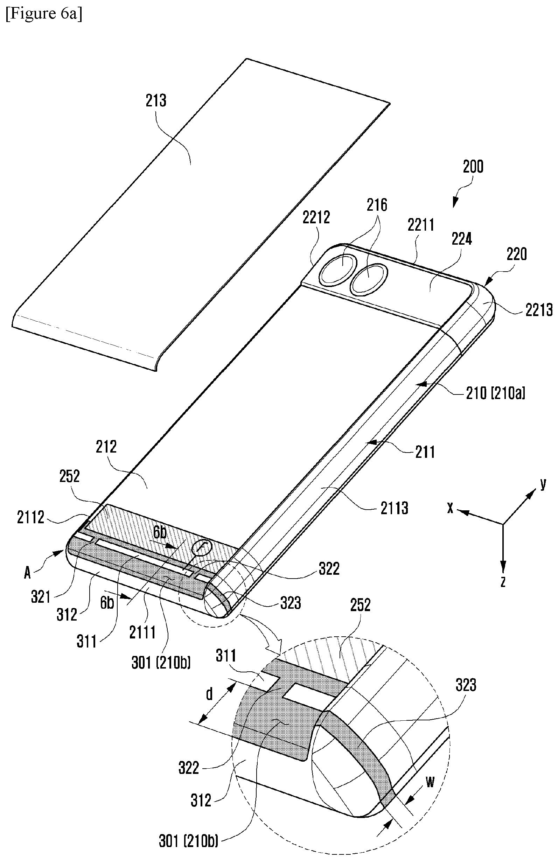

According to various embodiments, the electronic device 200 may include at least one electrical component disposed in the second space 2201. In an embodiment, the at least one electrical component may include a board 251 (e.g., a first board, a board assembly, or a main board) (e.g., stacked boards). In some embodiments, the at least one electrical component may be disposed in the first space 2101 of the first housing 210. In an embodiment, the electronic device 200 may include, in the first housing 210, another board (e.g., a second board or a sub-board) (e.g., the sub-board 252 of FIG. 6A) disposed between the first extension member 212 and the first rear surface cover 213, and an antenna member 253. In an embodiment, the other board and the antenna member 253 may be disposed on at least a portion of the first extension member 212. In an embodiment, the other board and the antenna member 253 may be electrically connected to the board 251 through at least one electrical connection member (e.g., a flexible printed circuit board (FPCB) or a flexible RF cable (FRC)). In an embodiment, the antenna member 253 may include a multi-function coil or multi-function core (MFC) antenna configured to perform a wireless charging function, a near-field communication (NFC) function, and/or an electronic payment function. In some embodiments, the still another board and/or the antenna member 253 may be electrically connected to the board 251 through an elastically deformable flexible board (e.g., a flexible printed circuit board (FPCB)) extending from the first space to the second space.

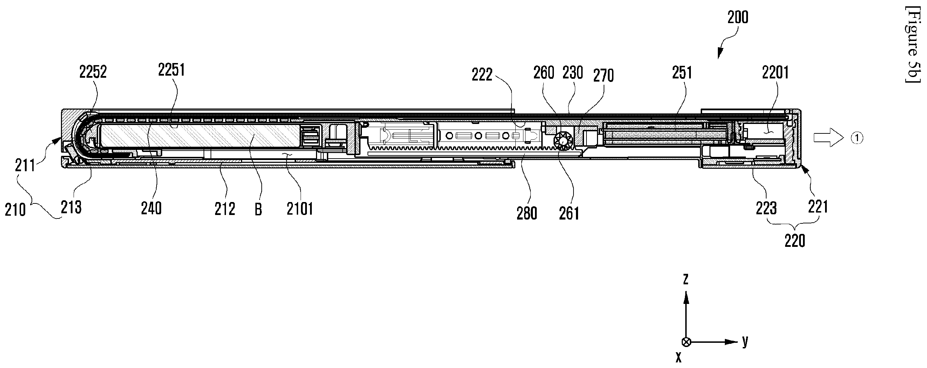

FIG. 5A is a cross-sectional view of an electronic device taken along line 5a-5a of FIG. 2A, according to various embodiments of the disclosure. FIG. 5B is a cross-sectional view of an electronic device according to various embodiments of the disclosure taken along line 5b-5b of FIG. 3A.

In describing the electronic device 200 of FIGS. 5A and 5B, the same reference numerals are assigned to components substantially identical to those of the electronic device 200 of FIG. 4, and a detailed description thereof may be omitted.

Referring to FIGS. 5A and 5B, the electronic device 200 may include a first housing 210 having a first space 2101, a second housing 220 having a second space 2201, a support member 240 connected to the second housing 220 and accommodated, at least partially, in the first space 2101 in the slide-in state, a flexible display 230 disposed to be supported by at least a portion of the support member 240 and at least a portion of the second housing 220, a rack gear 280 fixed in the first space 2101 and extending to the second space 2201, and a driving motor 260 disposed in the second space 2201 and including a pinion gear 261 engaged with the rack gear 280. In an embodiment, the driving motor 260 may automatically move the second housing 220 in a slide-out direction ① or a slide-in direction ② with respect to the first housing 210 through engagement between the pinion gear 261 and the rack gear 280. In an embodiment, the electronic device 200 may include a first rear surface cover 213 coupled to a first extension member 212 extending from a first side surface member 211 of the first housing 210. In an embodiment, the electronic device 200 may include a second rear surface cover 223 coupled to a second extension member 222 extending from the second side surface member 221.

According to various embodiments, a portion of a second housing 220 may be accommodated in the first space 2101 of the first housing 210 in the slide-in state of the electronic device 200 (the state of FIG. 5A). In an embodiment, at least a portion of the flexible display 230 may be disposed to be invisible from the outside by being accommodated in the first space 2101 together with the support member 240 in a bent manner. In this case, a first display area of the flexible display 230 (e.g., a display area corresponding to a first portion 230a of FIG. 3A) may be exposed to the outside.

According to various embodiments, at least a portion of the second housing 220 may transition, through driving of a driving motor 260, to the slide-out state in which the at least a portion of the second housing 220 moves at least partially outward from the first housing 210 along a first direction ①. In an embodiment, in the slide-out state of the electronic device 200 (the state of FIG. 5B), the flexible display 230 may move together with the support member 240 while being supported by the support bracket 225, such that a portion that has been slid into the first space 2101 may be at least partially exposed to be visible from the outside. In this case, the flexible display 230 may expose, to the outside, a second display area (e.g., a display area including the first portion 230a and the second portion 230b of FIG. 3A) expanded from the first display area.

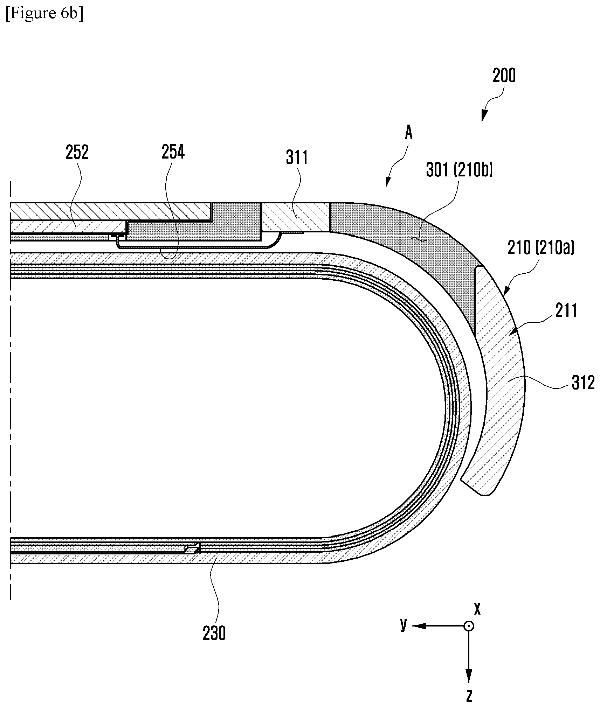

FIG. 6A is a rear perspective view of an electronic device including an antenna according to various embodiments of the disclosure. FIG. 6B is a partial cross-sectional view of the electronic device taken along line 6B-6B of FIG. 6A according to various embodiments of the disclosure.

Referring to FIGS. 6A and 6B, the electronic device 200 may include a first housing 210, a second housing 220 slidably coupled to the first housing 210, and a flexible display 230 disposed to be supported by the first housing 210 and the second housing 220 and to have a display area variable according to a sliding operation. In an embodiment, at least a portion of the first housing 210 and/or the second housing 220 may be formed of a conductive member 210a. In an embodiment, the first housing 210 may include a first side surface member 211 forming side portions of the electronic device 200 (e.g., a first side portion 2111, a second side portion 2112, and a third side portion 2113). In an embodiment, the electronic device 200 may include a first extension member 212 extending from the first side surface member 211 into an internal space (e.g., the first space 2101 of FIG. 4) or structurally coupled to the first side surface member 211.

According to various embodiments, the electronic device 200 may include an antenna A (e.g., an antenna radiator) disposed through at least a portion of the first housing 210 formed of a conductive member 210a (e.g., metal). In an embodiment, the antenna A may include a first conductive portion 311 physically and/or electrically separated from the conductive member 210a through a non-conductive region 301 disposed in the first housing 210 and at least one non-conductive portion 321 or 322 (e.g., a gap or a segmented portion). In an embodiment, the antenna A may include a second conductive portion 312 spaced apart from the first conductive portion 311 through the non-conductive region 301. In an embodiment, the non-conductive region 301 may be filled with a non-conductive member 210b (e.g., polymer). In this case, the conductive member 210a and the non-conductive member 210b may be disposed as portions of the first housing 210, for example, through insert molding. In an embodiment, the antenna A may be configured to operate in a designated frequency band through the first conductive portion 311 and the second conductive portion 312. In an embodiment, the designated frequency band may include at least one frequency band among a low band of about 600 MHz to about 960 MHz, a mid-band of about 1700 MHz to about 2200 MHz, a high band of about 2300 MHz to about 2800 MHz, a sub-6 band of about 5 GHz to about 6 GHz, an ultra-high band (UHB) of about 3.2 GHz to about 4.5 GHz, Bluetooth (BT), global positioning system (GPS), or wireless fidelity (WIFI).

According to various embodiments, the first conductive portion 311 may be disposed to be separated from the conductive member 210a through a first non-conductive portion 321 and a second non-conductive portion 322 spaced apart from each other. In an embodiment, the first non-conductive portion 321 and the second non-conductive portion 322 may be formed by portions extending from the non-conductive member 210b. In an embodiment, the first non-conductive portion 321 and the second non-conductive portion 322 may be replaced with a non-conductive material different from the non-conductive member 210b. In an embodiment, the second conductive portion 312 may include a portion of the conductive member 210a spaced apart from the first conductive portion 311 through the non-conductive region 301. In an embodiment, one end of the second conductive portion 312 may be disposed to be electrically and/or physically separated from the conductive member 210a through a third non-conductive portion 323. In this case, a wireless communication circuit (e.g., the wireless communication circuit F of FIG. 6A) (e.g., the wireless communication module 192 of FIG. 1) may be electrically connected (e.g., for feeding) to one point of the first conductive portion 311 and may be configured to transmit or receive a wireless signal in the designated frequency band through the first conductive portion 311 and the second conductive portion 312. In an embodiment, the conductive member 210a, the first conductive portion 311, the second conductive portion 312, the first non-conductive portion 321, the second non-conductive portion 322, the third non-conductive portion 323, and the non-conductive member 210b may be formed as portions of the first housing 210 through insert molding.

According to various embodiments, the first conductive portion 311 may be disposed on the rear surface of the first housing 210. For example, at least a portion of the first conductive portion 311 may be formed as a portion of the first extension member 212. In an embodiment, the second conductive portion 312 may be disposed through portions of the first side portion 2111 (e.g., the first side surface), the second side portion 2112 (e.g., the second side surface), and the third side portion 2113 (e.g., the third side surface) of the first side surface member 211 of the first housing 210. In some embodiments, the second conductive portion 312 may be disposed only through a portion of the first side portion 2111. In an embodiment, the non-conductive region 301 may be disposed to extend from the rear surface of the first housing 210 (e.g., a portion of the first extension member 212) to the first side portion 2111. In an embodiment, the first non-conductive portion 321 and the second non-conductive portion 322 may be disposed in the non-conductive region 301 disposed on the rear surface of the first housing 210 (e.g., a portion of the first extension member 212) so as to electrically and/or physically separate the first conductive portion 311 from the conductive member 210a. In an embodiment, the third non-conductive portion 323 may be disposed on the third side portion 2113 (e.g., the third side surface) of the first housing 210. In some embodiments, the third non-conductive portion 323 may be disposed on the second side portion 2112 (e.g., the second side surface), depending on a feeding position of the first conductive portion 311. In some embodiments, the first conductive portion 311 may be disposed on the first side portion 2111 (e.g., the first side surface) so as to be spaced apart from the second conductive portion 312.

According to various embodiments, the first conductive portion 311 may be electrically connected to a sub-board 252 (e.g., a printed circuit board (PCB) or a flexible printed circuit board (FPCB)) disposed in the first housing 210. In an embodiment, the first conductive portion 311 may be electrically connected to a wireless communication circuit F (e.g., a feeding unit) (e.g., the wireless communication module 192 of FIG. 1) disposed on the sub-board 252 through a wiring member 254 (e.g., an electrical connection member). In an embodiment, the wiring member 254 may include a flexible printed circuit board (FPCB), one end of which is electrically connected to the sub-board 252 and the other end of which is electrically connected to at least a portion of the first conductive portion 311. In an embodiment, the wiring member 254 may be electrically connected to the sub-board 252 and/or the first conductive portion 311 by soldering, connector coupling, or physical contact through a conductive contact. In an embodiment, the first conductive portion 311 and the first and second non-conductive portions 321 and 322 may be concealed so as not to be visible from the outside by a first rear surface cover 213 formed of a dielectric material and disposed on the rear surface of the first housing 210. In this case, the sub-board 252 may be disposed in a space between the first rear surface cover 213 and the first extension member 212. In some embodiments, the sub-board 252 may be disposed, in the first housing 210, in a space between the first extension member 212 and the flexible display 230. In an embodiment, the third non-conductive portion 323 may be exposed to be visible from the outside on the third side portion 2113 or the second side portion 2112. In some embodiments, the third non-conductive portion 323 may also be disposed such that at least a portion thereof is not visible from the outside by paint applied to an outer surface of the first side surface member 211.

According to various embodiments, the third non-conductive portion 323 may be positioned in a direction opposite to a region near either the first non-conductive portion 321 or the second non-conductive portion 322 in which a current distribution of the first conductive portion 311 is concentrated (e.g., an open end). As a result, a smooth current flow may be induced from the first conductive portion 311 to the second conductive portion 312, which may help to improve radiation performance of the antenna A. For example, as illustrated in FIG. 6A, when the first conductive portion 311 is fed at a position offset from the center in the -x-axis direction, a portion in which current is concentrated (e.g., an open end) may be located near the first non-conductive portion 321. In this case, the third non-conductive portion 323 may be located on the third side portion 2113 opposite to the first non-conductive portion 321 where the current is concentrated. In an embodiment, the third non-conductive portion 323 may be disposed, in the first housing 210, near the first non-conductive portion 321 or the second non-conductive portion 322 that is relatively close to a feeding position of the first conductive portion 311. For example, in FIG. 6A, when the feeding position of the first conductive portion 311 is closer to the second non-conductive portion 322 than to the first non-conductive portion 321, the third non-conductive portion 323 may be located on the third side portion 2113 or the first side portion 2111, which is relatively close to the second non-conductive portion 322. When the feeding position of the first conductive portion 311 is closer to the first non-conductive portion 321 than to the second non-conductive portion 322, the third non-conductive portion 323 may be disposed on the second side portion 2112 or the first side portion 2111, which is relatively close to the first non-conductive portion 321.

According to various embodiments, a distance d between the first conductive portion 311 and the second conductive portion 312 may be defined so that a current flow generated in the first conductive portion 311 through feeding is guided in a forward direction toward the second conductive portion 312. For example, the shortest distance d between the first conductive portion 311 and the second conductive portion 312 may be configured to include at least a distance at which the first conductive portion 311 and the second conductive portion 312 are not electrically coupled to each other. In an embodiment, the third non-conductive portion 323 may be formed to have a predetermined width w. In an embodiment, radiation performance of the antenna A may be determined according to the width w of the third non-conductive portion 323.

According to various embodiments, the second conductive portion 312 may help to supplement an electrical length corresponding to an operating frequency band of the antenna A through the first conductive portion 311. For example, when the first conductive portion 311 operates in a low band, a sufficient electrical length may be secured through the second conductive portion 312, thereby helping to improve radiation performance of the antenna A. In an embodiment, the second conductive portion 312 disposed through portions of the first side portion 2111, the second side portion 2112, and the third side portion 2113 may help to expand a black matrix (BM) region for the flexible display 230 by eliminating an eaves structure. For example, the second conductive portion 312 disposed as a portion of the first side portion 2111 may not form an eaves structure that was positioned relatively closer to the flexible display 230 than the first side portion 2111 was. This may help to improve radiation performance of the antenna A by reducing unintended coupling between the flexible display 230 and the second conductive portion 312 as a separation distance between the second conductive portion 312 and the flexible display 230 increases.

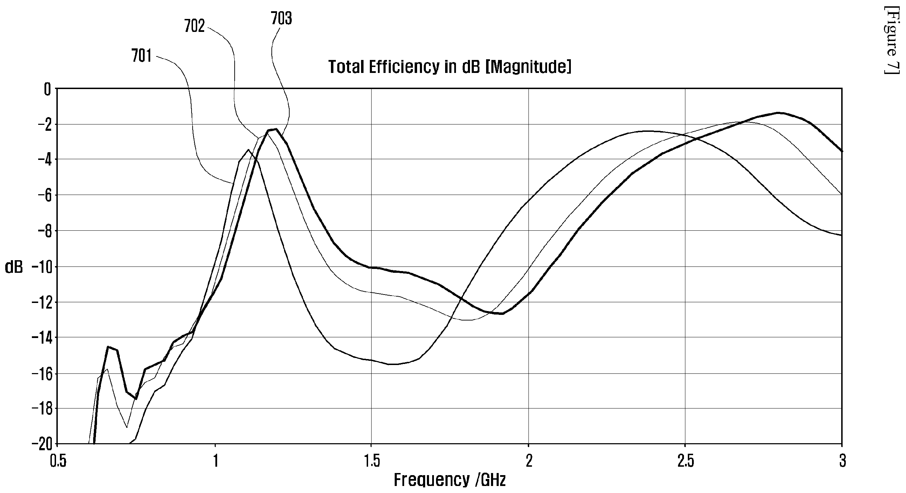

FIG. 7 illustrates a graph comparing radiation performance of antennas according to changes in the width of the third non-conductive portion according to various embodiments of the disclosure.

Referring to FIGS. 7 and 6A, it can be seen that the antenna A, which uses the first conductive portion 311 disposed in the first housing 210 through the first non-conductive portion 321 and the second non-conductive portion 322, and the second conductive portion 312 spaced apart from the first conductive portion 311 through the non-conductive region 301 and disposed to be separated from the conductive member 210a of the first housing 210 through the third non-conductive portion 323, exhibits excellent radiation performance with a high efficiency of about -4 dB or more in the designated frequency band regardless of the width w of the third non-conductive portion 323.

According to various embodiments, it can be seen that, when the width w of the third non-conductive portion 323 for spacing the second conductive portion 312 apart from the conductive member 210a of the first housing 210 is 2 mm (graph 702), the efficiency of the antenna is relatively improved and the operating frequency band is shifted to a higher frequency, as compared with when the width w is 1 mm (graph 701). In addition, it can be seen that, when the width w of the third non-conductive portion 323 is 3 mm (graph 703), the efficiency of the antenna A is relatively improved and the operating frequency band is further shifted to a higher frequency, as compared with when the width w is 2 mm (graph 702). This may mean that radiation performance of the antenna A is improved as the width w of the third non-conductive portion 323 increases and the second conductive portion 312 is spaced farther apart from the conductive member 210a of the first housing 210, and may also mean that the operating frequency band of the antenna A can be readily adjusted by adjusting the width w of the third non-conductive portion 323.

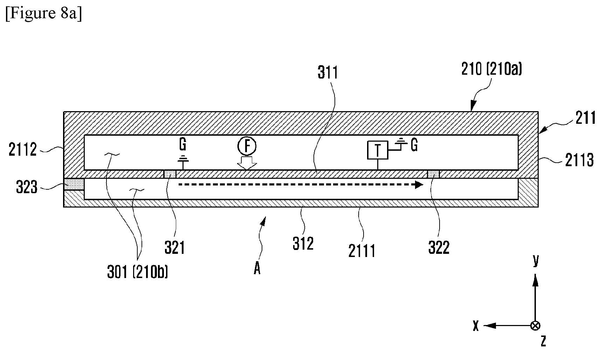

FIGS. 8A to 8F are configuration views of antennas disposed in a first housing according to various embodiments of the disclosure.

In describing the arrangement structures of the first conductive portion 311 and the second conductive portion 312 of FIGS. 8A to 8F, the same reference numerals are assigned to components substantially identical to those illustrated in FIGS. 6A and 6B, and detailed descriptions thereof may be omitted.

Referring to FIG. 8A, the first housing 210 may include a first side surface member 211 formed of a conductive member 210a and including a first side portion 2111, a second side portion 2112, and a third side portion 2113. In an embodiment, the first housing 210 may include a first conductive portion 311 electrically and/or physically separated from the conductive member 210a through a non-conductive region 301 and a first non-conductive portion 321 and a second non-conductive portion 322 spaced apart from each other. In an embodiment, the non-conductive region 301 may be filled with a non-conductive member 210b. In an embodiment, at least a portion of the non-conductive region 301 may be formed as an opening. In an embodiment, the first housing 210 may include a second conductive portion 312 disposed to have a predetermined separation distance from the first conductive portion 311 through the non-conductive region 301. One end of the second conductive portion 312 may be disposed to be spaced apart from the conductive member 210a through a third non-conductive portion 323, and the other end may extend from the conductive member 210a. In an embodiment, one end of the second conductive portion 312 may be disposed to be electrically disconnected from the conductive member 210a through the third non-conductive portion 323. In an embodiment, the first conductive portion 311 and the second conductive portion 312 may operate as an antenna A in a designated frequency band by being electrically connected to a wireless communication circuit F (e.g., the wireless communication module 192 of FIG. 1) (e.g., a feeding unit).

According to various embodiments, the first conductive portion 311 may be electrically connected to the wireless communication circuit F at a position closer to the second non-conductive portion 322 than to the first non-conductive portion 321. In this case, the third non-conductive portion 323 may be disposed on the third side surface 2113, which is relatively closer to the second non-conductive portion 322 than to the first non-conductive portion 321. In an embodiment, the first conductive portion 311 may be electrically connected to a ground G of the electronic device (e.g., a ground of a sub-board (e.g., the sub-board 252 of FIG. 6A)) between a feeding position of the wireless communication circuit F and the second non-conductive portion 322. In an embodiment, the first conductive portion 311 may include a tunable circuit (tunable IC) T disposed in an electrical path connected to the ground G between the feeding position of the wireless communication circuit F and the first non-conductive portion 321. In an embodiment, the tunable circuit T may include a plurality of passive elements (e.g., capacitors and/or inductors) and a switching circuit disposed to be controllable by the electronic device (e.g., a processor) so as to electrically connect at least one of the plurality of passive elements to the first conductive portion 311 or electrically disconnect the tunable circuit T from the first conductive portion 311. In an embodiment, the antenna A may be configured such that the operating frequency band thereof is shifted through control of the tunable circuit T. In an embodiment, the electrical path and the tunable circuit T may be disposed on the sub-board 252. In some embodiments, the tunable circuit T may be omitted. In this case, a current fed to the first conductive portion 311 may flow from the second non-conductive portion 322 toward the first non-conductive portion 321 (e.g., in the x-axis direction) and may then be guided along the second conductive portion 312 over a length extending to the third non-conductive portion 323.

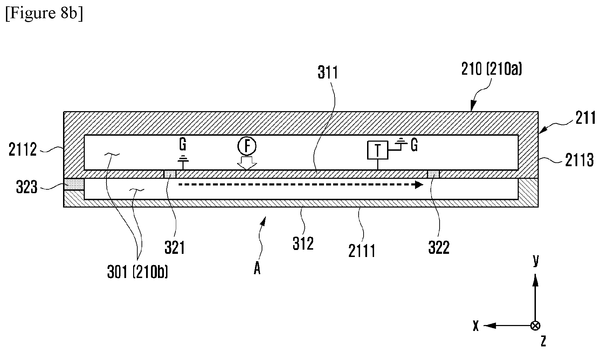

In describing the configurations of FIGS. 8B to 8F, the same reference numerals are assigned to components substantially identical to those of the configuration of FIG. 8A, and detailed descriptions thereof may be omitted.

Referring to FIG. 8B, the antenna A may include a first conductive portion 311 and a second conductive portion 312 disposed to be spaced apart from the first conductive portion 311. In an embodiment, the first conductive portion 311 may be electrically connected to the wireless communication circuit F at a position closer to the first non-conductive portion 321 than to the second non-conductive portion 322. In this case, the third non-conductive portion 323 may be disposed on the second side portion 2112, which is relatively closer to the first non-conductive portion 321 than to the second non-conductive portion 322. In an embodiment, the first conductive portion 311 may be electrically connected to the ground G of the electronic device between the feeding position of the wireless communication circuit F and the first non-conductive portion 321. In an embodiment, the first conductive portion 311 may include a tunable circuit (tunable IC) T disposed in an electrical path connected to the ground G between the feeding position of the wireless communication circuit F and the second non-conductive portion 322. In this case, a current fed to the first conductive portion 311 may flow from the first non-conductive portion 321 toward the second non-conductive portion 322 (e.g., in the -x-axis direction) and may then be guided along the second conductive portion 312 over a length extending to the third non-conductive portion 323.

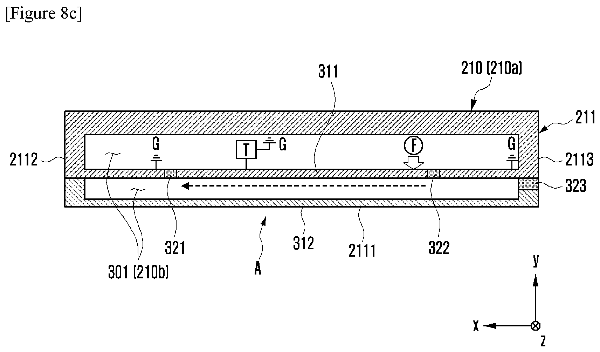

Referring to FIG. 8C, in the configuration of FIG. 8A, the ground G connection structure connected to the first conductive portion 311 is omitted, and a portion of the conductive member 210a of the first housing 210 included in the non-conductive region 301 may be electrically connected to the ground G between the first non-conductive portion 321 and the second side portion 2112 and between the second non-conductive portion 322 and the third side portion 2113. In this case, a current fed to the first conductive portion 311 may be guided, in a direction from the second non-conductive portion 322 toward the first non-conductive portion 321 (e.g., in the x-axis direction), along a length extending to a point of the ground G located outside the first non-conductive portion 321.

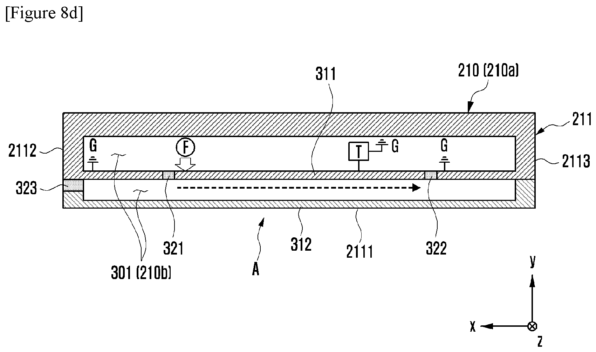

Referring to FIG. 8D, in the configuration of FIG. 8B, the ground G connection structure connected to the first conductive portion 311 is omitted, and a portion of the conductive member 210a of the first housing 210 included in the non-conductive region 301 may be electrically connected to the ground G between the first non-conductive portion 321 and the second side portion 2112 and between the second non-conductive portion 322 and the third side portion 2113. In this case, a current fed to the first conductive portion 311 may be guided, in a direction from the first non-conductive portion 321 toward the second non-conductive portion 322 (e.g., in the -x-axis direction), along a length extending to a point of the ground G located outside the second non-conductive portion 322.

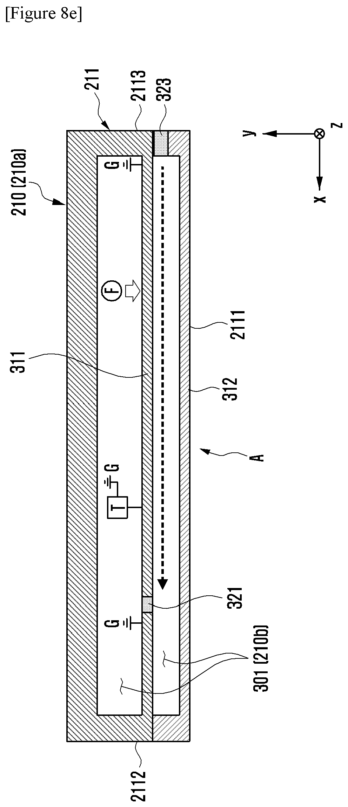

Referring to FIG. 8E, in the configuration of FIG. 8C, the second non-conductive portion 322 may be omitted. In this case, a current fed to the first conductive portion 311 may be guided, in a direction toward the first non-conductive portion 321 (e.g., in the x-axis direction), along a length between ground points G disposed on opposite sides with respect to a feeding point of the first conductive portion 311.

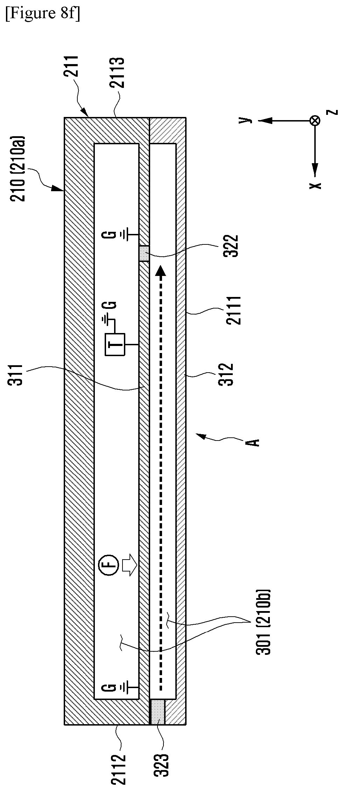

Referring to FIG. 8F, in the configuration of FIG. 8D, the first non-conductive portion 321 may be omitted. In this case, a current fed to the first conductive portion 311 may be guided, in a direction toward the second non-conductive portion 322 (e.g., in the -x-axis direction), along a length between ground points G disposed on opposite sides with respect to a feeding point of the first conductive portion 311.

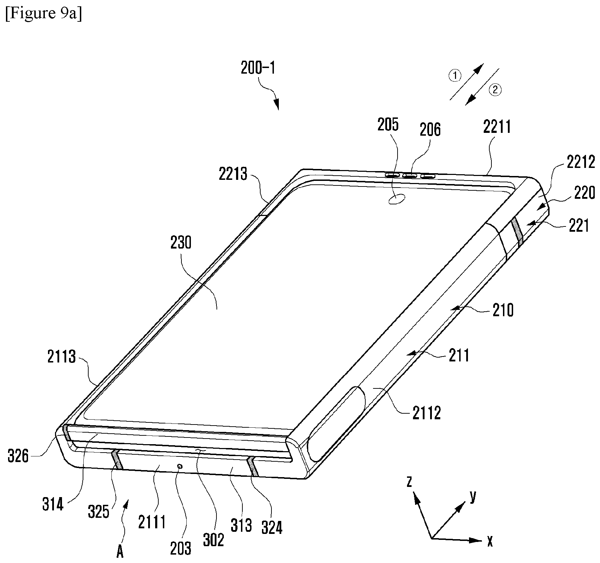

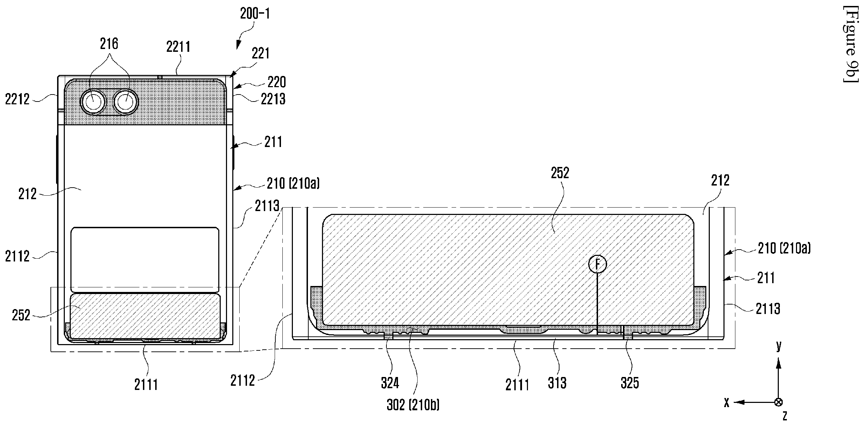

FIG. 9A is a front perspective view of an electronic device including an antenna according to various embodiments of the disclosure. FIG. 9B is a rear configuration view of the electronic device of FIG. 9A according to various embodiments of the disclosure.

In describing the electronic device 200-1 of FIGS. 9A and 9B, the same reference numerals are assigned to components substantially identical to those of the electronic device 200 of FIGS. 6A and 6B, and detailed descriptions thereof may be omitted.

Referring to FIGS. 9A and 9B, the electronic device 200-1 (e.g., the electronic device 200 of FIG. 6A or the electronic device 101 of FIG. 1) may include a first housing 210 (e.g., the first housing 210 of FIG. 6A), a second housing 220 (e.g., the second housing 220 of FIG. 6A) coupled to the first housing 210 to be slidable with respect to the first housing 210 in a slide-out direction (e.g., direction ①) or a slide-in direction (e.g., direction ②), and a flexible display 230 (e.g., the flexible display 230 of FIG. 6A) disposed to be supported by the first housing 210 and the second housing 220 and configured to have a display area variable according to sliding in or sliding out. In an embodiment, the first housing 210 may include a first side surface member 211 including a first side portion 2111, a second side portion 2112 extending from one end of the first side portion 2111, and a third side portion 2113 extending from the other end of the first side portion 2111. In an embodiment, the electronic device 200-1 may include a first extension member 212 extending from the first side surface member 211 into an internal space of the first housing 210.

According to various embodiments, the electronic device 200-1 may include an antenna A operating through a first conductive portion 313 and a second conductive portion 314 disposed through at least a portion of the first housing 210 formed of a conductive member 210a (e.g., metal). In an embodiment, the first conductive portion 313 may be disposed through a non-conductive region 302 disposed in at least a portion of the first housing 210. In an embodiment, the first conductive portion 313 may be disposed between a first non-conductive portion 324 and a second non-conductive portion 325 spaced apart from each other in the non-conductive region 302. In an embodiment, the non-conductive region 302 may be filled with a non-conductive member 210b (e.g., polymer). In an embodiment, the second conductive portion 314 may be disposed to be spaced apart from the first conductive portion 313 through the non-conductive region 302, and one end thereof may be physically and/or electrically separated from the conductive member 210a through a third non-conductive portion 326. In an embodiment, the first conductive portion 313 and the second conductive portion 314 may be disposed through the first side portion 2111 formed as a portion of the first side surface member 211 of the first housing 210. In an embodiment, the non-conductive region 302 may be disposed through the first side portion 2111 and at least a portion of the first extension member 212. In an embodiment, the non-conductive member 210b filling the non-conductive region 302 may extend to the first non-conductive portion 324, the second non-conductive portion 325, and the third non-conductive portion 326.

According to various embodiments, the electronic device 200-1 may include a sub-board 252 disposed in the first housing 210. In an embodiment, at least a portion of the first conductive portion 313 disposed relatively closer to the sub-board 252 than the second conductive portion 314 may be electrically connected to a wireless communication circuit F disposed on the sub-board 252 and may operate, together with the second conductive portion 314, as the antenna A in a designated frequency band.

The antenna A according to an exemplary embodiment of the disclosure may help to improve radiation performance by securing a sufficient electrical length using the first conductive portion 313 and at least a portion of the second conductive portion 314. In addition, the second conductive portion 314 disposed as a portion of the first side portion 2111 may help to improve radiation performance of the antenna A by reducing unintended coupling with the flexible display 230 through elimination of an eaves structure that was disposed relatively closer to the flexible display 230 than the first side portion 2111 was.

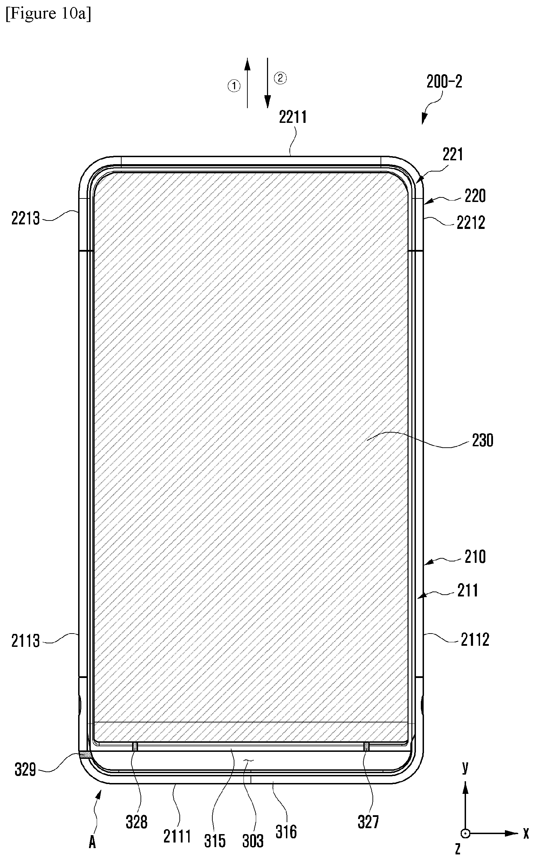

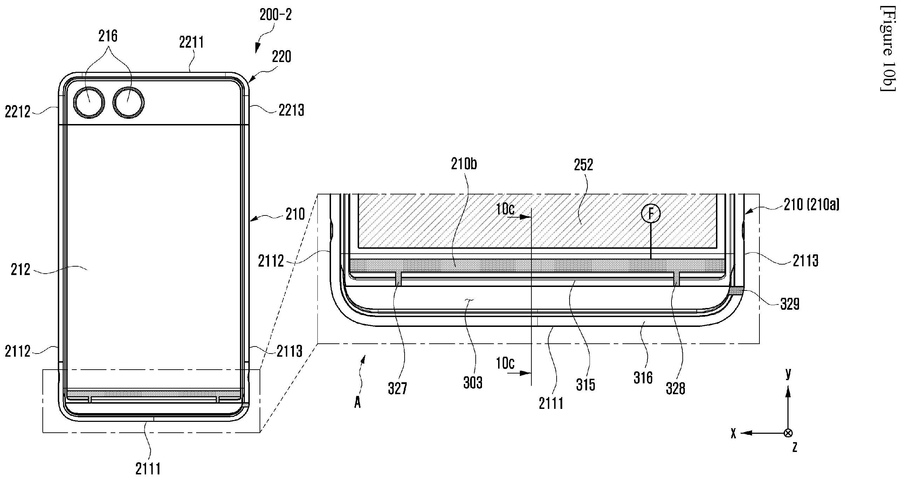

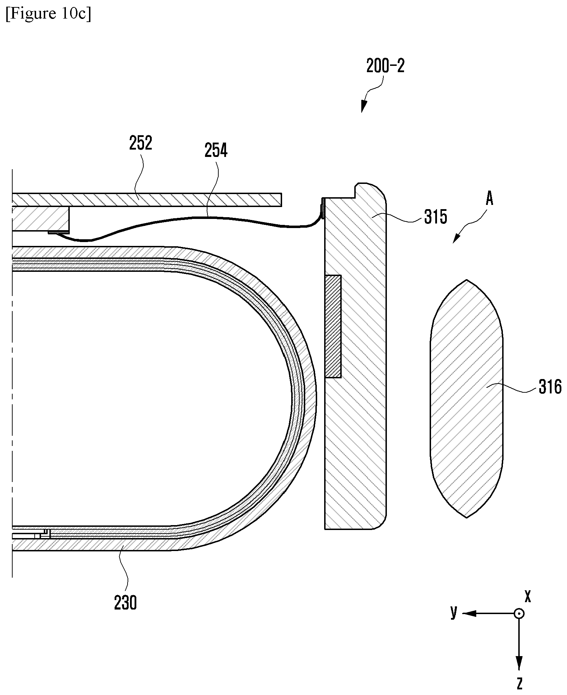

FIG. 10A is a front view of an electronic device according to various embodiments of the disclosure. FIG. 10B is a rear configuration view of the electronic device of FIG. 10A according to various embodiments of the disclosure. FIG. 10C is a partial cross-sectional view of the electronic device taken along line 10C-10C of FIG. 10B according to various embodiments of the disclosure.

In describing the electronic device 200-2 of FIGS. 10A to 10C, the same reference numerals are assigned to components substantially identical to those of the electronic device 200 of FIGS. 6A and 6B, and detailed descriptions thereof may be omitted.

Referring to FIGS. 10A to 10C, the electronic device 200-2 (e.g., the electronic device 200 of FIG. 6A or the electronic device 101 of FIG. 1) may include a first housing 210 (e.g., the first housing 210 of FIG. 6A), a second housing 220 (e.g., the second housing 220 of FIG. 6A) coupled to the first housing 210 to be slidable with respect to the first housing 210 in a slide-out direction (e.g., direction ①) or a slide-in direction (e.g., direction ②), and a flexible display 230 (e.g., the flexible display 230 of FIG. 6A) disposed to be supported by the first housing 210 and the second housing 220 and configured to have a display area variable according to sliding in or sliding out. In an embodiment, the first housing 210 may include a first side surface member 211 including a first side portion 2111, a second side portion 2112 extending from one end of the first side portion 2111, and a third side portion 2113 extending from the other end of the first side portion 2111. In an embodiment, the electronic device 200-2 may include a first extension member 212 extending from the first side surface member 211 into an internal space of the first housing 210.

According to various embodiments, the electronic device 200-2 may include an antenna A operating through a first conductive portion 315 disposed through at least a portion of the first housing 210 formed of a conductive member 210a (e.g., metal), and a second conductive portion 316 disposed to be at least partially spaced apart from the first conductive portion 315 through a non-conductive region 303. In an embodiment, the first conductive portion 315 may be disposed, in at least a portion of the first housing 210, to be electrically and/or physically separated from the conductive member 210a through a first non-conductive portion 327 and a second non-conductive portion 328 spaced apart from each other and through a non-conductive member 210b formed as a portion of the first extension member 212. In an embodiment, the non-conductive region 303 may include a through-opening (e.g., a through-hole). In an embodiment, the second conductive portion 316 may be formed as a portion of the first side portion 2111 of the electronic device 200-2 and may be disposed to be spaced apart from the first conductive portion 315 through the non-conductive region 303 formed as an opening. In an embodiment, the second conductive portion 316 may have one end integrally extending from the conductive member 210a of the first housing 210 and the other end spaced apart from the conductive member 210a through a third non-conductive portion 329. In some embodiments, the second conductive portion 316 may be detachably coupled to the conductive member 210a of the first housing 210. Even in this case, the second conductive portion 316 may be disposed such that one end thereof is electrically connected to the conductive member 210a and the other end thereof remains electrically and/or physically separated from the conductive member 210a through the third non-conductive portion 329. In an embodiment, the third non-conductive portion 329 may include an injection-molded part insert-molded between the conductive member 210a and the other end of the second conductive portion 316 so as to couple the conductive member 210a and the other end of the second conductive portion 316 to each other. In some embodiments, the third non-conductive portion 329 may include a coating layer formed of an insulating material and disposed between the conductive member 210a and the other end of the second conductive portion 316. In an embodiment, the non-conductive region 303 formed as an opening may protect a rolling portion of the flexible display 230 and may be used as an accessory connection structure for the electronic device 200-2. In an embodiment, the second conductive portion 316 may help to reinforce the rigidity for supporting the first conductive portion 315 of the first housing 210.

According to various embodiments, the electronic device 200-2 may include a sub-board 252 disposed in the first housing 210. In an embodiment, at least a portion of the first conductive portion 315 disposed relatively closer to the sub-board 252 than the second conductive portion 316 may be electrically connected to a wireless communication circuit F disposed on the sub-board 252 and may operate, together with the second conductive portion 316, as the antenna A in a designated frequency band.

The antenna A according to an exemplary embodiment of the disclosure may help to improve radiation performance by securing a sufficient electrical length using the first conductive portion 315 and at least a portion of the second conductive portion 316. In addition, the first conductive portion 315 disposed to support a rolling portion (e.g., a bending region) of the flexible display 230 may help to improve radiation performance of the antenna A by reducing unintended coupling with the flexible display 230 through elimination of an eaves structure.

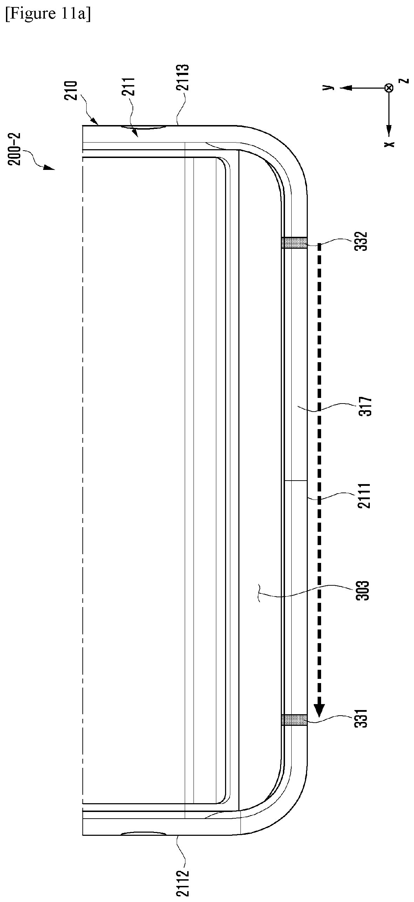

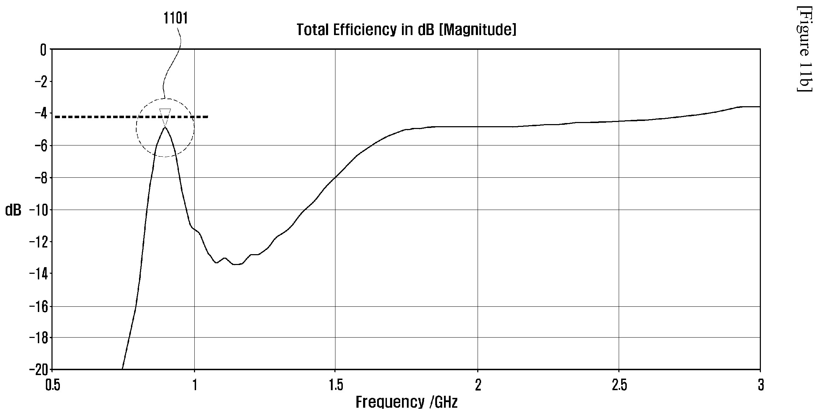

FIG. 11A is a partial configuration view of an electronic device including only a second conductive portion disposed through two non-conductive portions spaced apart from each other in the configuration of the electronic device of FIG. 10A according to various embodiments of the disclosure. FIG. 11B is a graph illustrating radiation performance of an antenna using the second conductive portion of FIG. 11A according to various embodiments of the disclosure.

Referring to FIGS. 11A and 11B, when only the second conductive portion 317, which is used as a portion of the first side portion 2111 and electrically and/or physically separated from the conductive member 210a of the first housing 210 through a pair of non-conductive portions 331 and 332 spaced apart from each other, is used alone as an antenna without the first conductive portion 315 of FIG. 10A in the electronic device 200-2, it can be seen that excellent radiation efficiency approaching about -4 dB is exhibited, as in region 1101 of FIG. 11B.

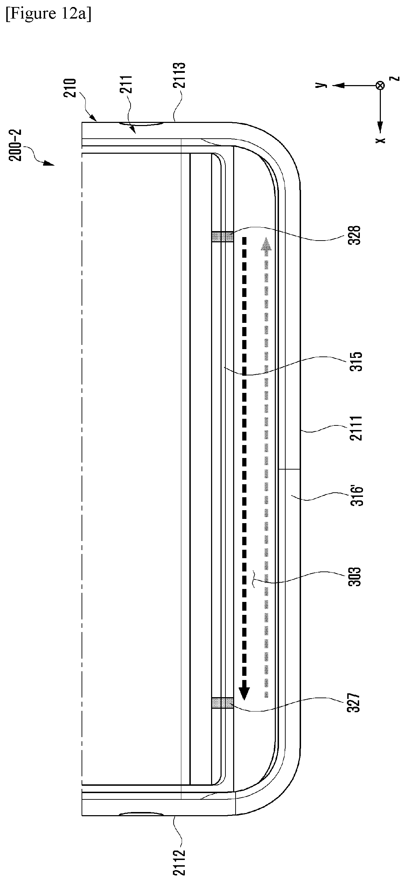

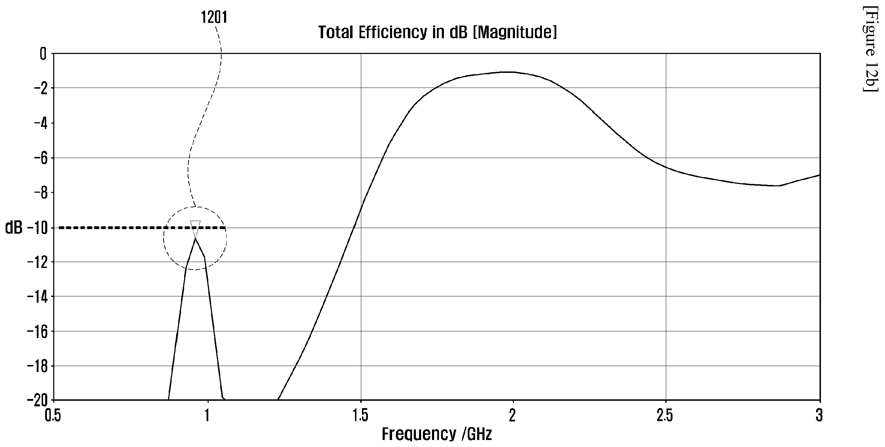

FIG. 12A is a partial configuration view of an electronic device including an antenna using at least a portion of a first conductive portion in the configuration of the electronic device of FIG. 10A according to various embodiments of the disclosure. FIG. 12B is a graph illustrating radiation performance of an antenna using the first conductive portion of FIG. 12A according to various embodiments of the disclosure.

Referring to FIGS. 12A and 12B, in the configuration of the electronic device 200-2 of FIG. 10A, when only the first conductive portion 315 is used alone as an antenna through the first non-conductive portion 327 and the second non-conductive portion 328 spaced apart from each other, without the second conductive portion 316 segmented by the third non-conductive portion 329, it can be seen that significantly reduced radiation performance of about -10 dB or less is exhibited, as in region 1201 of FIG. 12B. This may mean that the second conductive portion 316', which is disposed near the first conductive portion 315 and outward therefrom and is not segmented by the third non-conductive portion 329, acts as a peripheral conductive structure that reduces radiation performance of the antenna, and that the radiation performance of the antenna may be reduced due to a reverse current formed between the first conductive portion 315 and the second conductive portion 316'.

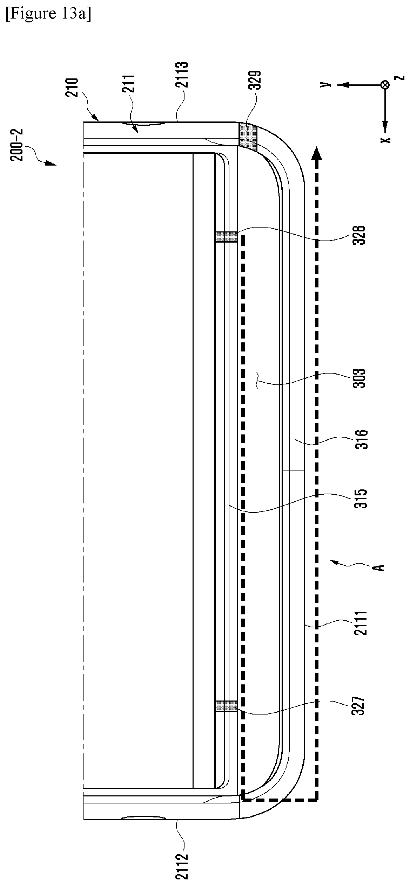

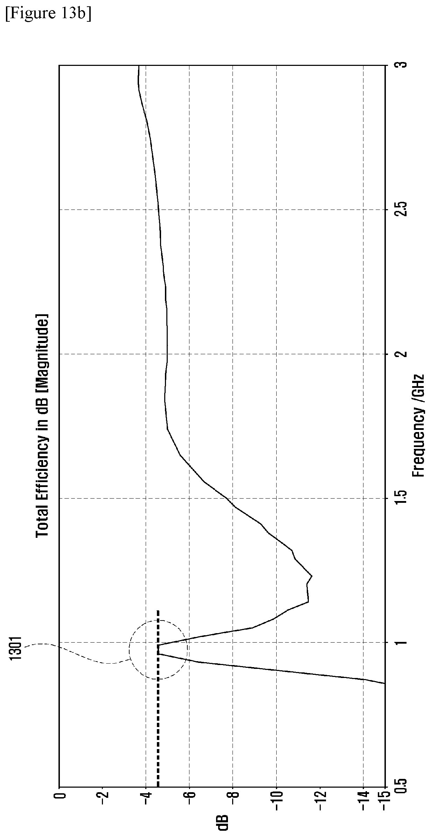

FIG. 13A is a partial configuration view of an electronic device including an antenna using at least portions of a first conductive portion and a second conductive portion in the configuration of the electronic device of FIG. 10A according to various embodiments of the disclosure. FIG. 13B is a graph illustrating radiation performance of an antenna using the first conductive portion and the second conductive portion of FIG. 13A according to various embodiments of the disclosure.

Referring to FIGS. 13A and 13B, like the electronic device 200-2 of FIG. 10A, the electronic device 200-2 may include an antenna A using, as radiators, both a first conductive portion 315 formed through a first non-conductive portion 327 and a second non-conductive portion 328 spaced apart from each other, and a second conductive portion 316 at least partially spaced apart from the first conductive portion 315 through a non-conductive region 303 and having one end electrically and/or physically separated from the conductive member 210a of the first housing 210 through a third non-conductive portion 329. In this case, it can be seen that the antenna A exhibits excellent radiation performance approaching about -4 dB, as in region 1301 of FIG. 13B. This may mean that, as one end of the second conductive portion 316 is electrically and/or physically separated from the conductive member 210a of the first housing 210, a smooth current flow is induced from the first conductive portion 315 to the second conductive portion 316, thereby improving radiation performance of the antenna A.

Furthermore, the rigidity of the first conductive portion 315 may be weakened by removal of an eaves structure positioned near the flexible display 230 to expand a BM region. By including a structure in which the second conductive portion 316 is disposed through the third non-conductive portion 329, the electronic device according to an exemplary embodiment of the disclosure may help to reinforce the rigidity of the electronic device 200-2 while maintaining performance of the antenna A at a level equivalent to that of the antenna of FIG. 11B.

According to various embodiments, an electronic device may include a first housing (e.g., the first housing 210 of FIG. 6A) at least partially formed of a conductive member (e.g., the conductive member 210a of FIG. 6A), a second housing (e.g., the second housing 220 of FIG. 6A) slidably coupled to the first housing, a first conductive portion (e.g., the first conductive portion 311 of FIG. 6A) and a second conductive portion (e.g., the second conductive portion 312 of FIG. 6A) disposed in the first housing to be spaced apart from each other through a non-conductive region (e.g., the non-conductive region 301 of FIG. 6A), and a wireless communication circuit (e.g., the wireless communication circuit F of FIG. 6A) configured to transmit or receive a signal through the first conductive portion and the second conductive portion. The first conductive portion may be disposed to be separated from the conductive member through a first non-conductive portion (e.g., the first non-conductive portion 321 of FIG. 6A) and a second non-conductive portion (e.g., the second non-conductive portion 322 of FIG. 6A) spaced apart from each other, and the second conductive portion (e.g., the second conductive portion 312 of FIG. 6A) may be disposed to be at least partially separated from the conductive member through a third non-conductive portion (e.g., the third non-conductive portion 323 of FIG. 6A).

According to various embodiments, the non-conductive region may be filled with a non-conductive member (e.g., the non-conductive member 210b of FIG. 6A) to connect the first conductive portion and the second conductive portion.

According to various embodiments, the first non-conductive portion, the second non-conductive portion, and the third non-conductive portion may be provided by an extension of the non-conductive member.

According to various embodiments, the electronic device may include a board (e.g., the sub-board 252 of FIG. 6A) disposed in the first housing and including the wireless communication circuit, and the wireless communication circuit may be electrically connected to the first conductive portion.

According to various embodiments, the third non-conductive portion may be located in a direction opposite to a region near either the first non-conductive portion or the second non-conductive portion in which a current distribution of the first conductive portion is concentrated.

According to various embodiments, the shortest distance (e.g., the distance d of FIG. 6A) between the first conductive portion and the second conductive portion may include at least a distance at which the first conductive portion and the second conductive portion are not coupled to each other.

According to various embodiments, radiation performance of the antenna A using the first conductive portion and the second conductive portion may be determined by a width (e.g., the width w of FIG. 6A) of the third non-conductive portion.

According to various embodiments, the first housing may include a first side surface member (e.g., the first side surface member 211 of FIG. 6A) including a first side portion (e.g., the first side portion 2111 of FIG. 6A), a second side portion (e.g., the second side portion 2112 of FIG. 6A) extending in the sliding direction from one end of the first side portion, and a third side portion (e.g., the third side portion 2113 of FIG. 6A) extending in the sliding direction from the other end of the first side portion, and a first extension member (e.g., the first extension member 212 of FIG. 6A) extending from or coupled to the first side surface member. The first side surface member and the first extension member may define a first space (e.g., the first space 2101 of FIG. 4) configured to accommodate a portion of the second housing.

According to various embodiments, the non-conductive region may be disposed through a portion of the first side portion and a portion of the first extension member, and the first conductive portion may be disposed in at least a portion of the first extension member.

According to various embodiments, the second conductive portion may be disposed in at least a portion of the first side portion.

According to various embodiments, the third non-conductive portion may be disposed in the second side portion or the third side portion.

According to various embodiments, the non-conductive region (e.g., the non-conductive region 302 of FIG. 9A), the first conductive portion (e.g., the first conductive portion 313 of FIG. 9A), and the second conductive portion (e.g., the second conductive portion 314 of FIG. 9A) may be disposed in the first side portion (e.g., the first side portion 2111 of FIG. 9A).

According to various embodiments, the non-conductive region (e.g., the non-conductive region 303 of FIG. 10A) may include an opening.

According to various embodiments, the second conductive portion may be at least partially integrally formed with the first housing.

According to various embodiments, the second conductive portion may be structurally coupled to the first housing.

According to various embodiments, the third non-conductive portion may include an injection-molded part connecting the second conductive portion and the first housing.

According to various embodiments, the third non-conductive portion may be a coating layer including an insulating material disposed between the first housing and the second conductive portion.

According to various embodiments, the electronic device may include a flexible display (e.g., the flexible display 230 of FIG. 6A) disposed to be at least partially supported by the second housing and partially accommodated in the first housing in a slide-in state.

According to various embodiments, the first conductive portion may be disposed to be separated from the conductive member through the first non-conductive portion and the second non-conductive portion in the non-conductive region.

According to various embodiments, an electronic device may include a first housing (e.g., the first housing 210 of FIG. 6A) at least partially formed of a conductive member (e.g., the conductive member 210a of FIG. 6A), a second housing (e.g., the second housing 220 of FIG. 6A) slidably coupled to the first housing, a first conductive portion (e.g., the first conductive portion 311 of FIG. 6A) and a second conductive portion (e.g., the second conductive portion 312 of FIG. 6A) disposed in the first housing to be spaced apart from each other through a non-conductive region (e.g., the non-conductive region 301 of FIG. 6A), and a wireless communication circuit (e.g., the wireless communication circuit F of FIG. 6A) configured to transmit or receive a signal through the first conductive portion and the second conductive portion. The first conductive portion may be disposed to be at least partially separated from the conductive member through at least one first non-conductive portion (e.g., the first non-conductive portion 321 of FIG. 6A) and a second non-conductive portion (e.g., the second non-conductive portion 322 of FIG. 6A), and the second conductive portion (e.g., the second conductive portion 312 of FIG. 6A) may be disposed to be at least partially separated from the conductive member through a second non-conductive portion (e.g., the third non-conductive portion 323 of FIG. 6A).

In addition, the embodiments of the disclosure disclosed in the specification and the drawings merely present specific examples in order to easily explain the technical features according to the embodiments of the disclosure and to aid understanding of the embodiments of the disclosure, and are not intended to limit the scope of the embodiments of the disclosure. Accordingly, the scope of the various embodiments of the disclosure should be construed as including, in addition to the embodiments disclosed herein, all changes or modified forms derived based on the technical spirit of the various embodiments of the disclosure.

## Claims

1. An electronic device comprising:
a first housing (210) at least partially formed of a conductive member (210a);
a second housing (220) slidably coupled to the first housing;
a first conductive portion (311) and a second conductive portion (312) disposed in the first housing to be spaced apart from each other through a non-conductive region (301); and
a wireless communication circuit (F) configured to transmit or receive a signal through the first conductive portion and the second conductive portion,
wherein the first conductive portion is disposed to be separated from the conductive member through a first non-conductive portion (321) and a second non-conductive portion (322) spaced apart from each other, and
wherein the second conductive portion (312) is disposed to be at least partially separated from the conductive member through a third non-conductive portion (323).

2. The electronic device of claim 1, wherein the non-conductive region is filled with a non-conductive member (210b) to connect the first conductive portion and the second conductive portion.

3. The electronic device of claim 2, wherein the first non-conductive portion, the second non-conductive portion, and the third non-conductive portion are provided by an extension of the non-conductive member.

4. The electronic device of claim 1, further comprising:
a board (252) disposed in the first housing and comprising the wireless communication circuit,
wherein the wireless communication circuit is electrically connected to the first conductive portion.

5. The electronic device of claim 4, wherein the third non-conductive portion is located in a direction opposite to a region near either the first non-conductive portion or the second non-conductive portion in which a current distribution of the first conductive portion is concentrated.

6. The electronic device of claim 1, wherein a shortest distance (d) between the first conductive portion and the second conductive portion includes at least a distance at which the first conductive portion and the second conductive portion are not coupled to each other.

7. The electronic device of claim 1, wherein radiation performance of an antenna (A) using the first conductive portion and the second conductive portion is determined by a width (w) of the third non-conductive portion.

8. The electronic device of claim 1, wherein the first housing comprises:
a first side surface member (211) comprising a first side portion (2111), a second side portion (2112) extending in a sliding direction from one end of the first side portion, and a third side portion (2113) extending in the sliding direction from the other end of the first side portion; and
a first extension member (212) extending from or coupled to the first side surface member,
wherein the first side surface member and the first extension member define a first space (2101) configured to accommodate a portion of the second housing.

9. The electronic device of claim 8, wherein the non-conductive region is disposed through a portion of the first side portion and a portion of the first extension member, and
wherein the first conductive portion is disposed in at least a portion of the first extension member.

10. The electronic device of claim 9, wherein the second conductive portion is disposed in at least a portion of the first side portion.

11. The electronic device of claim 10, wherein the third non-conductive portion is disposed in the second side portion or the third side portion.

12. The electronic device of claim 8, wherein the non-conductive region (302), the first conductive portion (313), and the second conductive portion (314) are disposed in the first side portion (2111).

13. The electronic device of claim 12, wherein the non-conductive region (303) includes an opening.

14. The electronic device of claim 13, wherein the second conductive portion is at least partially integrally formed with the first housing.

15. The electronic device of claim 13, wherein the second conductive portion is structurally coupled to the first housing.
